(19) Europäisches Patentamt
European Patent Office
Office européen des brevets

(11) EP 3 784 742 B1

(12) # EUROPÄISCHE PATENTSCHRIFT

(45) Veröffentlichungstag und Bekanntmachung des Hinweises auf die Patenterteilung:
**03.01.2024 Patentblatt 2024/01**

(21) Anmeldenummer: **19722028.8**

(22) Anmeldetag: **26.04.2019**

(51) Internationale Patentklassifikation (IPC):
***C09J 7/10*** *(2018.01)* ***C09J 175/04*** *(2006.01)*
***C08G 18/86*** *(2006.01)*

(52) Gemeinsame Patentklassifikation (CPC):
**C09J 7/10; C08G 18/86; C09J 175/04;**
C08G 2170/20; C08K 5/14; C09J 2301/304;
C09J 2301/408; C09J 2475/00

(86) Internationale Anmeldenummer:
**PCT/EP2019/060780**

(87) Internationale Veröffentlichungsnummer:
**WO 2019/207125 (31.10.2019 Gazette 2019/44)**

(54) **LATENT REAKTIVER KLEBEFILM**

LATENT REACTIVE ADHESIVE FILM

FILM ADHÉSIF À RÉACTIVITÉ LATENTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.04.2018 DE 102018206632**

(43) Veröffentlichungstag der Anmeldung:
**03.03.2021 Patentblatt 2021/09**

(73) Patentinhaber: **tesa SE**
**22848 Norderstedt (DE)**

(72) Erfinder:
- **KUPSKY, Marco**
  **25451 Quickborn (DE)**
- **DOLLASE, Thilo**
  **22397 Hamburg (DE)**
- **KOOP, Matthias**
  **22848 Norderstedt (DE)**
- **PREUSS, Philipp**
  **22851 Norderstedt (DE)**

(74) Vertreter: **tesa SE**
**Hugo-Kirchberg-Straße 1**
**22848 Norderstedt (DE)**

(56) Entgegenhaltungen:
**EP-A1- 1 734 092 DE-A1-102009 005 518**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 784 742 B1

## Beschreibung

Die Erfindung betrifft einen Klebstoff, umfassend ein oder mehrere Polymere und mindestens ein Peroxid, sowie einen latent reaktiven Klebefilm umfassend mindestens eine Schicht eines derartigen Klebstoffs.

Klebefilme sind ein lange bekanntes Mittel zur Verklebung zweier Substrate miteinander, um die Nachteile von Flüssigklebern zu umgehen. Klebefilme bieten unter anderem den Vorteil, gut gelagert und transportiert werden zu können, gut konfektionierbar zu sein und im Anwendungsfall leicht applizierbar zu sein. Dabei können je nach für den Klebefilm verwendetem Klebstoff gute Repositionierungseigenschaften bei dennoch schließlich sehr hohen Klebkräften realisiert werden.

Klebebänder werden heute in vielfältiger Form z. B. als Hilfsmittel in Prozessen und zum Verbinden verschiedener Objekte verwendet. Viele Selbstklebebänder, die Haftklebmassen enthalten, weisen dabei permanente Klebrigkeit auf. Sie können ohne weitere Härtung üblicherweise unmittelbar nach Verklebung ihre Verbindungsaufgabe ausüben. Mit solchen Selbstklebebändern sind mitunter sehr hohe Verklebungsfestigkeiten realisierbar. Trotzdem besteht in bestimmten Anwendungen der Bedarf nach Klebelösungen, die noch höhere Verklebungsfestigkeiten als klassische Selbstklebebänder erlauben.

Viele solcher Klebesysteme, die zu hochfesten Verklebungen führen, werden in einem Heißverpressschritt appliziert. Die eingesetzten Klebstoffe - die bei Raumtemperatur häufig nicht selbstklebrig sind - schmelzen dann auf, benetzen den Verklebungsuntergrund und bauen während des Abkühlens durch Erstarrung Festigkeit auf. Solche Klebesysteme können zudem noch chemische Reaktivität aufweisen. Durch derartige Reaktionen lässt sich die Kohäsion des Klebstoffs erhöhen und somit die Verklebungsfestigkeit weiter optimieren. Darüber hinaus können solche Reaktionen einen positiven Einfluss auf die chemische Beständigkeit und die Witterungsbeständigkeit aufweisen.

Manche Reaktivklebstoffe umfassen eine mit einem Härter reaktive Polymerzusammensetzung und einen entsprechenden Härter. Das Polymer weist dabei funktionelle Gruppen auf, die mit korrespondierenden Gruppen des Härters unter entsprechender Aktivierung zur Reaktion gebracht werden können. Unter dem Begriff "härtbare Klebmasse" werden daher im Stand der Technik solche Zubereitungen verstanden, die funktionelle Gruppen enthalten, die durch Einwirkung einer entsprechenden Härterkomponente in Kombination mit erhöhter Temperatur als zusätzlichem Stimulus an einer Reaktion teilnehmen können, die zu einem Molmassenaufbau und/oder einer Quervernetzung zumindest eines Zubereitungsbestandteils führt und/oder verschiedene Zubereitungsbestandteile kovalent aneinander bindet.

Peroxide sind als Härter für ungesättigte Polymersysteme bekannt. Beispielsweise beschreibt die EP 0 650 987 A ein klebendes fluorhaltiges Polymer, das im Rahmen einer Pfropfung an Moleküle gebunden werden kann, die aus verschiedenen organischen Materialien oder anorganischen Materialien hergestellt sind und zumindest eine funktionelle, zum Pfropfen an das fluorhaltige Polymer fähige Verknüpfungsgruppe aufweisen. Das fluorhaltige Polymer kann ein Thermoplast sein. Peroxide als radikalische Initiatoren für die Umsetzung mit dem fluorhaltigen Polymer werden erwähnt.

US 4,725,637 beschreibt Nitrilkautschuk-haltige Formulierungen, die mit Peroxiden vernetzt werden können. EP 287 928 beschreibt EVA-haltige Formulierungen, die mit Peroxid vernetzt werden können, insbesondere für Kabelummantelungen. Es werden sehr geringe Peroxidmengen als geeignet offenbart. Klebefilme sind nicht genannt.

Die US 2003178138 A offenbart elektrisch leitfähige, reaktive Klebefilme zum Verkleben zweier Elektroden. Als Klebmassen werden Mischungen aus Klebstoffen und haftklebrigen leitfähigen Polymeren eingesetzt, insbesondere Polyphthalid. Der Klebstoff kann unter anderem ein irreversibel heißhärtender Klebstoff ("Duroplast", englisch: "Thermoset") oder ein thermoplastischer Klebstoff ("Hotmelt") sein.

Das Klebeband umfassend den heißhärtenden Klebstoff kann aus einem filmbildenden Matrixpolymer und einem Reaktivsystem aus einer ungesättigten, polymerisierbaren Verbindung und einem Polymerisationsinitiator bestehen. Der Polymerisationsinitiator für solche ungesättigten Verbindungen kann ein Dialkylperoxid sein.

Die Härtung beziehungsweise Vernetzung von thermoplastischen Polymeren insbesondere in Abwesenheit radikalisch polymerisierbarer und ungesättigter Systeme durch Peroxide ist nicht offenbart oder nahegelegt.

DE 10 2013 222 739 offenbart Klebefilme, die ein thermoplastisches Polyurethan, AcrylatMonomere und einen Radikalstarter, z. B. ein Hydroperoxid enthalten. Speziell genannt wird Cumolhydroperoxid.

Die EP 1734092 A1 offenbart einen folienförmigen Klebstoff umfassend Ethylen-Vinylacetat-Copolymer, organisches Peroxid und Triallyl(iso)cyanurat.

Die DE 10 2009 005 518 A1 offenbart ein Verfahren zur Korrosionsschutzbehandlung von Metalloberflächen, wobei auf die Metalloberfläche ein Klebeband mit einer Schicht aus einem Olefinpolymer und einem Vernetzer aufgebracht wird und dass das Klebeband derart erwärmt wird, dass die Schicht aufgeschmolzen wird und sich so eine Korrosionsschutzschicht ausbildet. Der Vernetzer kann hierbei ein Peroxid sein.

Aufgabe der Erfindung ist es, besonders lagerstabile, aber durch Wärme reaktive Klebefilme auf Basis thermoplastischer Polymere anzubieten. Vorteilhaft sind die Klebefilme auch bei erhöhten Temperaturen lagerstabil. Weiter vorteilhaft weisen die mit den Klebefilmen hergestellten Verklebungen eine gute Feucht-Wärme-Beständigkeit auf. Sie sollen sich durch schnelle Härtbarkeit auszeichnen.

Als weiterer, bevorzugt hinzukommender Vorteil wird angestrebt, dass die Klebefilme bei den angewendeten Verklebungsbedingungen, durch die Härtungsreaktion keine leichtflüchtigen Bestandteile absondern, um insbesondere eine Blasenbildung zu vermeiden.

Erfindungsgemäß konnte nun festgestellt werden, dass Klebstoffe - synonym "Klebmassen" - auf Basis einer Polymerkomponente, die zumindest zu 50 Gew.-% thermoplastische Polymere umfasst, selbst dann in Gegenwart von Peroxiden zur Herstellung der gewünschten Klebefilme geeignet ist, wenn thermoplastische Polymere ohne C-C-Mehrfachbindungen eingesetzt werden, wobei zumindest eines der thermoplastischen Polymere ein Polyurethan ist. Diese Polymere besitzen somit keine radikalisch polymerisierbaren Gruppen.

Dementsprechend betrifft die Erfindung einen Klebefilm umfassend mindestens eine Schicht aus einem Klebstoff, wobei der Klebstoff eine Polymerkomponente und mindestens ein Peroxid umfasst, wobei die Polymerkomponente mindestens 50 Gew.-% solcher thermoplastischen Polymere umfasst, die keine C=C-Doppelbindungen und keine C≡C-Dreifachbindungen aufweisen, wobei zumindest eines der thermoplastischen Polymere ein Polyurethan ist.

Als Peroxide werden solche gewählt, bei denen die 1-Minuten-Halbwertszeittemperatur $T(t_{1/2}=1min)$ in Form einer 0,1 molaren Lösung in Monochlorbenzol 200 °C nicht überschreitet, bevorzugt 190 °C nicht überschritten wird, sehr bevorzugt 180 °C nicht überschritten wird.

Die Peroxide sind insbesondere solche, die - außer vorstehender Definition zu genügen - außerdem an jedem Sauerstoffatom eine Organylgruppe tragen. Als Peroxide werden dementsprechend Verbindungen der allgemeinen Struktur R-O-O-R' eingesetzt, wobei es sich bei den Resten R und R' um Organylgruppen handelt, die unabhängig voneinander gewählt sein oder auch identisch sein können, und wobei R und R' auch miteinander verbunden sein können, so dass über die Peroxy-Gruppe ( -O-O-) ein Zyklus gebildet ist, so dass eine

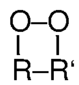

tur der Art resultiert.

Als Organylgruppen werden organische Reste - unabhängig davon, welche funktionelle Gruppe darin enthalten ist - mit einer oder seltener mehreren freien Valenzen an einem Kohlenstoffatom bezeichnet. Beispiele hierfür sind Acetonylgruppen, Acylgruppe (zum Beispiel Acetylgruppen, Benzoylgruppen), Alkylgruppen (zum Beispiel Methylgruppen, Ethylgruppen), Alkenylgruppe (zum Beispiel Vinylgruppen, Allylgruppen), Alkinylgruppen (Propargylgruppen), Aminocarbonylgruppen, Ampicilloylgruppen (Reste, abgeleitet von Ampicillin), Arylgruppen (zum Beispiel Phenylgruppen, 1-Naphthylgruppen, 2-Naphthylgruppen, 2-Thiophenylgruppen, 2,4-Dinitrophenylgruppen), Alkylarylgruppen (zum Beispiel Benzylgruppen, Triphenylmethylgruppen), Benzyloxycarbonyl-Gruppen (Cbz), tert-Butoxycarbonylgruppen (Boc), Carboxygruppen, (Fluoren-9-ylmethoxy)carbonylgruppen (Fmoc), Furfurylgruppen, Glycidylgruppen, Halogenalkylgruppen (zum Beispiel Chlormethylgruppen, 2,2,2-Trifluorethylgruppen), Indolylgruppen, Nitrilgruppen, Nucleosidylgruppen, Tritylgruppen, um nur einige zu nennen.

Peroxide der allgemeinen Struktur R-O-O-R' (auch in cyclischer Form) haben beispielsweise im Vergleich zu den Hydroperoxiden den Vorteil, dass sie bei der thermischen Aktivierung der Klebemasse kein Wasser im Sinne primärer Spaltprodukte freisetzen. Erfindungsgemäß ist es gewünscht, flüchtige Bestandteile mit Siedepunkten oberhalb von 150°C, bevorzugt mit Siedepunkten oberhalb von 120 °C, weitestmöglich zu reduzieren, bevorzugt vollständig zu vermeiden, um insbesondere eine Blasenbildung in der Klebestelle und damit deren Schwächung zu vermeiden. Dementsprechend sind R und R' der erfindungsgemäßen Peroxide insbesondere bevorzugt derart zu wählen, dass auch diese nicht zur Bildung leicht flüchtiger primärer Spaltprodukte - wie beispielweise Kohlenstoffdioxid, Isopropanol - führen.

Die erfindungsgemäßen Klebefilme haben sich als hervorragend vorlaminierbar und im Heißverpressschritt zur Ausbildung der schließlichen Klebefestigkeit aktivierbar herausgestellt, das heißt sie beinhalten die Fähigkeit zur chemischen Reaktion, insbesondere zu einer schnellen Vernetzungs- und/oder Härtungsreaktion, nach entsprechender Aktivierung. Die Aktivierung erfolgt insbesondere thermisch, das heißt durch Wärmezufuhr. Grundsätzlich sind andere Aktivierungsmethoden - wie beispielsweise induktiv, durch Mikrowellen, durch Bestrahlung mit UV- Strahlung, Laserbehandlung, Plasma-Behandlung - auch für latentreaktive Klebebänder bekannt. Im Sinne der vorliegenden Erfindung findet die Aktivierung jedoch sehr bevorzugt durch thermische Energiezufuhr statt, und die weiteren Aktivierungsmethoden können insbesondere und optional ergänzend (additiv) eingesetzt werden, etwa durch Zumischung von UV-Photoinitiatoren in den Klebstoff. Dies stellt eine besondere Ausführung der Erfindung, nicht aber den Regelfall dar.

Während der Wärmezufuhr schmilzt der Klebstoff auf und kann die zu verklebenden Substratoberflächen hervorragend benetzen, und durch die Vernetzungs- beziehungsweise Härtungsreaktion kommt es zu einer Kohäsionserhöhung des Klebstoffs. Dies wird durch Einsatz thermoplastischer Basispolymere erreicht.

Durch die reaktive Verklebung sind die erfindungsgemäßen Klebefilme somit in der Lage, hohe Verklebungsfestigkeiten zu den Substratuntergründen, auf denen sie verklebt werden, zu generieren. Die Verklebungsfestigkeiten

können dabei beispielweise Größenordnungen annehmen, die denen üblicher Haftklebmassen um den Faktor 10 und mehr übersteigen.

Die erfindungsgemäß eingesetzten Klebstoffe und die entsprechenden Klebefilme sind latent-reaktiv. Als latent-reaktiv werden im Sinne dieser Erfindung solche aktivierbaren Klebesysteme bezeichnet, die ohne Aktivierung über längere Zeiträume stabil lagerbar sind. Latent-reaktive Klebefilme sind solche, die bei Normalklima (23 °C [296,15 K]; 50 % r.F.) und insbesondere bei erhöhten Lagerungstemperaturen (insbesondere bis 40 °C [316,15 K]) nicht oder nur über einen Zeitraum von Monaten aushärten und damit lagerstabil sind, die aber bei deutlich höheren Temperaturen aktivierbar sind und aushärten und/oder vernetzen. Die latente Reaktivität bietet den Vorteil, dass diese Klebefilme bei Normalklima und insbesondere bei erhöhten Temperaturen bis 40 °C gelagert, transportiert und weiter verarbeitet (beispielweise konfektioniert) werden können, bevor sie dann an der Verklebungsstelle zum Einsatz kommen und ausgehärtet werden. Dabei sollen sich die Klebstoffe während der Lagerzeit nicht signifikant verändern, so dass die Verklebungseigenschaften eines frisch nach der Herstellung zur Verklebung angewendeten Klebstoffsystems und eines nach längerer Lagerung für die ansonsten vergleichbare Verklebung angewendeten Klebstoffsystems nicht wesentlich unterscheiden.

Die erfindungsgemäßen Zusammensetzungen zeichnen sich dadurch aus, dass sie einerseits latentreaktiv sind und andererseits bei erhöhter Temperatur schnell härtbar.

Klebstoff-Komponenten

Erfindungsgemäß wird das zumindest eine Peroxid, beziehungsweise werden die mehreren eingesetzten Peroxide, derart gewählt, dass es bei erhöhten Temperaturen - Temperaturen oberhalb ihrer Aktivierungstemperatur - vergleichsweise hohe Zerfallsgeschwindigkeiten beziehungsweise geringe Halbwertszeiten [$t_{1/2}$] besitzt. Die Zerfallsgeschwindigkeit der Peroxide ist ein kennzeichnendes Kriterium für deren Reaktivität und wird durch die Angabe der Halbwertszeiten bei bestimmten Temperaturen [$t_{1/2}(T)$] quantifiziert, wobei die Halbwertszeit wie üblich die Zeit darstellt, nach der die Hälfte des Peroxids bei den vorgegebenen Bedingungen zerfallen ist. Je höher die Temperatur, desto geringer ist in der Regel die Halbwertszeit des Zerfalls. Je höher also die Zerfallsgeschwindigkeit, desto geringer ist die Halbwertszeit.

Als Halbwertszeittemperatur [$T(t_{1/2})$] wird die Temperatur bezeichnet, bei der die Halbwertszeit einem vorgegebenen Wert entspricht, so ist beispielsweise die 10-Stunden-Halbwertszeittemperatur [$T(t_{1/2}$=10h)] die Temperatur, bei der die Halbwertszeit des untersuchten Stoffs gerade 10 Stunden beträgt, die 1-Minuten-Halbwertszeittemperatur [$T(t_{1/2}$=1min)] diejenige Temperatur, bei der die Halbwertszeit des untersuchten Stoffs gerade 1 Minute beträgt, und entsprechend.

Erfindungsgemäß hätte der Fachmann nicht erwartet, dass Peroxide erfindungsgemäß genutzt werden können, da die Anforderungen an hinreichender Lagerstabilität bei geringen und bei moderat erhöhten Temperaturen (also sehr schwacher Zerfall, siehe auch nachfolgend), aber ausreichend starkem Zerfall bei der Verpresstemperatur (also der Aktivierung des Klebefilms) und somit die Bereitstellung ausreichender Reaktivität bei der Härtung des Klebefilms sich grundlegend widersprechen. Es konnte jedoch festgestellt werden, dass der Einsatz der erfindungsgemäß genutzten Peroxide erfolgreich war und zudem noch feucht-wärmebeständige Produkte angeboten werden konnten.

Im Sinne dieser Erfindung wird das zumindest eine Peroxid, beziehungsweise werden die mehreren eingesetzten Peroxide, derart gewählt, dass die 1-Minuten-Halbwertszeittemperatur $T(t_{1/2}$=1min) in Lösung 200 °C nicht überschreitet, bevorzugt 190 °C nicht überschreitet, sehr bevorzugt 180 °C nicht überschreitet.

Die vorstehende Bedingung gilt insbesondere als erfüllt, wenn das betreffende Peroxid zumindest in Monochlorbenzol (Lösung 0,1 molar) einen entsprechenden Halbwertszeittemperatur-Wert aufweist.

Solche Halbwertszeiten lassen sich experimentell ermitteln (Konzentrationsermittlung mittels DSC beziehungsweise Titration) und sind auch der einschlägigen Literatur entnehmbar. Die Halbwertszeiten sind auch durch Berechnung erhältlich aus den für das jeweilige Peroxid spezifischen Konstanten Arrhenius-Frequenzfaktor und Zerfalls-Aktivierungsenergie für die jeweils vorgegebenen Bedingungen. Dabei gelten die folgenden Beziehungen:

$$- dc/dt = k \cdot c \qquad [1]$$

$$\ln (c_1/c_0) = -k \cdot t \qquad [2]$$

$$t_{1/2} = \ln 2/k \qquad \text{für } c_t(t_{1/2}) = c_0/2 \qquad [3\}$$

$$k = A \cdot e^{-Ea/RT} \qquad [4]$$

wobei $C_0$ = Ausgangskontentration
$c_t$ = Kontzentration zum Zeitpunkt t
$c_t(t_{1/2})$ = Konzentration zur Halbwertzeit
$t_{1/2}$ = Halbwertszeit
k = Zerfallskonstante
A = Arrhenius-Frequenzfaktor
Ea = Aktivierungsenergie für den Peroxidzerfall
R = allgemeine Gaskonstante (R = 8,3142 J/(mol·K))
T = absolute Temperatur

Die in dieser Schrift genannten Halbwertszeiten und die Halbwertszeittemperaturen beziehen sich jeweils auf eine 0,1 molare Lösung des entsprechenden Peroxids in Monochlorbenzol, sofern nicht im Einzelnen etwas anderes angegeben ist.

Über die für die jeweiligen Bedingungen - wie etwa das eingesetzte Lösemittel - recherchierbaren oder aus recherchierbaren Werten errechenbaren Konstanten Arrhenius-Frequenzfaktor und Zerfalls-Aktivierungsenergie lassen sich die Halbwertszeiten und die Halbwertszeittemperaturen auf jeweils andere Bedingungen - wie etwa in anderen Lösemitteln - umrechnen und somit vergleichbar machen.

Bei entsprechender Wahl der Peroxide ist es gelungen, selbst gesättigte thermoplastische Polymersysteme trotz guter Latenz - also Lagerstabilität ohne wesentliche Vernetzung bzw. Härtung bei Lagerungsbedingungen mit Temperaturen bis zu 40 °C - zu vernetzen. Dabei war insbesondere nicht zu erwarten, dass die erfindungsgemäß eingesetzten Peroxide, insbesondere Dicumylperoxid, als Vernetzer für gesättigte thermoplastische Polymere ohne C-C-Mehrfachbindungen latent-reaktive Klebefilme mit besonders positiven Eigenschaften erzeugt werden können, die solchen Systemen, die über reaktive Gruppen heißhärtbar sind, sogar noch überlegen sind. Entsprechend kann aus der Erfindung der Vorteil aus den Heißschmelzeigenschaften der thermoplastischen Polymersysteme gezogen werden, und zwar in Kombination mit der Möglichkeit, das Polymer trotz der Abwesenheit radikalisch reaktiver Gruppen mittels Peroxid hervorragend zu vernetzen.

Bevorzugt werden solche Peroxide eingesetzt, die bei moderaten Temperaturen - insbesondere solchen deutlich unterhalb ihrer Aktivierungstemperaturen - zudem hohe Halbwertszeiten besitzen. Hiermit kann ein gutes Latenzverhalten, also eine gute Lagerstabilität, der die Peroxide umfassenden thermisch aktivierbaren Klebfolien erreicht werden. Entsprechend wird das zumindest eine Peroxid, beziehungsweise werden die mehreren eingesetzten Peroxide, derart gewählt, dass seine beziehungsweise ihre Halbwertszeit bei 80 °C - also etwa nach einem Vorlaminier-Prozess - mindestens 13,5 Stunden, insbesondere mindestens 22,5 Stunden, bevorzugt mindestens 69 Stunden, besonders bevorzugt mindestens 700 Stunden beträgt. So wird ermöglicht, dass das thermisch aktivierbare Klebeband bei 80 °C eine hinreichende Verarbeitungs- und Applikationszeit aufweist, indem nach einer Stunde noch mindestens 95 % des ursprünglich eingesetzten Peroxids (entsprechend $t_{1/2}$ = 13,5 h), insbesondere noch mindestens 97 % (entsprechend $t_{1/2}$ = 22,5 h), bevorzugt noch mindestens 99 % (entsprechend $t_{1/2}$ = 69 h), besonders bevorzugt noch mindestens 99,9 % des eingesetzten Peroxids vorhanden sind und somit noch nicht für eine Reaktion zur Verfügung standen.

Um ein lagerstabiles System zu garantieren, sollte die Halbwertszeit bei üblichen Lagerbedingungen - die üblicherweise etwa bis zu 40 °C betragen können - hoch sein. Daher sollten die eingesetzten Peroxide bevorzugt derart gewählt werden, dass ihre Halbwertzeit bei der Lagertemperatur, bevorzugt noch bei bis zu 40 °C, hinreichend groß ist, dass nach 9 Monaten (274 Tagen) noch mind. 75 %, bevorzugt 85 %, besonders bevorzugt 95 % oder ganz besonders bevorzugt mehr als 95 % des Peroxides für die Vernetzung zur Verfügung stehen. Die entsprechenden Halbwertszeiten lassen sich mit den oben genannten Beziehungen ermitteln.

Erfindungsgemäß geeignete Peroxide sind beispielsweise Vertreter aus den folgenden Gruppen: Dialkylperoxide, Diacylperoxide, Peroxyester, Peroxidicarbonate, Peroxyketale, zyklische Peroxide, für die die genannten Werte bezüglich 1-Minuten-Halbwertszeittemperatur, bevorzugt auch bezüglich Halbwertszeit bei 80 °C, weiter bevorzugt auch bezüglich Halbwertszeit bei 40 °C, realisiert sind.

Im Folgenden seien einige erfindungsgemäß vorteilhaft einsetzbare Vertreter aus den verschiedenen Gruppen beispielhaft genannt, für die dieses gilt:

*Dialkylperoxide:* Di-tert.Amylperoxid, Di-tert.-Butylperoxid, tert.-Butylcumylperoxid, Dicumylperoxid, 2,5-Dimethyl-2,5-di-(tert.-Butylperoxy)-hexan, 2,5-Dimethyl-2,5-di(tert.-butylperoxy)-hexyn-3, Di-(2-tert.-Butyl-peroxyisopropyl)-benzen;

*Diacylperoxide*: Dibenzoylperoxid, Dilauroylperoxid, Diisobutyrylperoxid, Didecanoylperoxid, Di-(3,5,5-trimethyl-hexanoyl)-peroxid;

*Ketonperoxide*: Acetylacetonperoxid, Cyclohexanonperoxid, Methylethylketonperoxid, Methylisobutylketon-peroxid;

*Peroxyester*: tert.-Butylperoxyacetat, tert.-Butylperoxybenzoat, tert.-Butylperoxydiethylacetat, tert.-Amyl-peroxy-2-ethylhexylcarbonat, tert.-Butylperoxyisopropylcarbonat, tert.-Butylperoxy-2-ethylhexyl-carbonat, tert.-Amylperoxy-2-ethylhexanoat, tert.-Butylperoxy-2-ethylhexanoat, 1,1,3,3-Tetramethylbutylperoxy-2-ethylhexanoat, tert.-Butylperoxy-3,5,5-trimethylhexanoat, tert.-Butyl-peroxyisobutyrat, tert.-Butylmonoperoxymaleat, tert.-Amylperoxineodecanoat, tert.-Butyl-peroxyneodecanoat, Cumolperoxyneodecanoat, 1,1,3,3-Tetramethylbutyl-peroxyneodecanoat, tert.-Butylperoxyneoheptanoat, tert.-Amylperoxypivalat, tert.-Butylperoxypivalat, 1,1,3,3-Tetramethylbutylperoxypivalat, 2,5-Dimethyl-2,5-di(2-ethylhexanoylperoxy)-hexan; *Peroxidicarbonate*: Di-n-peroxidicarbonat, Di-(2-ethylhexyl)-peroxydicarbonat, Di-n-butylperoxydicarbonat, Dicetyl-peroxydicarbonat, Dimyristylperoxydicarbonat, Di-(4-tert.-Butylcyclohexyl)-peroxydicarbonat;

*Peroxyketale*: 1,1-Di-(tert.-Butylperoxy)-3,3,5-trimethylcyclohexan, 1,1-Di-(tert.-Butylperoxy)-cyclohexan, 2,2-Di-(tert.-butylperoxy)-butan;

*Zyklische Peroxide*: 3,6,9-Triethyl-3,6,9-trimethyl-1,4,7-triperoxonan.

Erfindungsgemäß besonders vorteilhaft wird Dicumylperoxid (Bis(1-methyl-1-phenylethyl)peroxid) eingesetzt, das die folgenden Halbwertzeiten aufweist: 812 h bei 80 °C (entsprechend weniger als 0,1 % der ursprünglichen Peroxidmenge bei 80 °C innerhalb einer Stunde) , 10 h bei 112 °C; 1 h bei 132 °C; 0,1 h = 6 min bei 154 °C; 1 min bei 172 °C; alle vorgenannten Werte in Lösung (0,1 molar Monochlorbenzol).

Dicumylperoxid wird besonders bevorzugt ausgewählt, da hierdurch besonders lagerstabile und auch feuchtwärmebeständige Klebefilme erhalten werden können. Es können auch zwei oder mehrere Peroxide eingesetzt werden. In bevorzugter Vorgehensweise wird dann Dicumylperoxid als eines der zwei oder mehreren Peroxide gewählt.

Das beziehungsweise die eingesetzten Peroxide, insbesondere Dicumylperoxid, werden - insbesondere abhängig von ihrer Reaktivität - bevorzugt in einer Menge gewählt, dass die resultierende mit dem Klebefilm bewirkte Verklebung die gewünschten Eigenschaften aufweist und insbesondere die weiter unten näher definierten Spezifizierungen in den Push-Out-Tests erfüllt (als Frischprobe mindestens 4 MPa, bevorzugt auch nach definierte FeuchtWärmelagerung mindestens 3 MPa, weiter bevorzugt nach sechswöchiger Lagerung im Normklima nicht mehr als 10 % Einbuße, noch weiter auch nach sechswöchiger Lagerung und Feucht-Wärme-Lagerung nicht mehr als 10 % Einbuße, siehe zu den Details die jeweiligen Angaben weiter unten). Um diese Anforderungen zu erfüllen, haben sich Peroxidmengen - beispielweise die Dicumylperoxidmenge - von minimal 0,5 Gew.-%, vorteilhaft minimal 1 Gew.-%, besonders vorteilhaft minimal 2 Gew.-%, ganz besonders vorteilhaft minimal 3 Gew.-%, und von maximal 10 Gew.-%, bevorzugt maximal 8 Gew.-%, sehr bevorzugt maximal 7 Gew.-% als sehr vorteilhaft herausgestellt.

Peroxide, die den Anforderungen gemäß der vorliegenden Erfindung nicht genügen, sind beispielsweise eine Vielzahl von Hydroperoxiden, also Verbindungen der allgemeinen Formel R-O-O-H, bei denen Reine Organylgruppe ist.

Die Liste von Hydroperoxiden, die erfindungsgemäß nicht zum gewünschten Erfolg führen, umfasst beispielsweise Cumolhydroperoxid, tert.-Butylhydroperoxid, p-Menthanhydroperoxid, 1,1,3,3-Tetramethylbutyl-hydroperoxid, tert.-Amylhydroperoxid, Diisopropylbenzenmonohydroperoxid.

Erfindungsgemäß hat sich gezeigt, dass diese Hydroperoxide nicht in der Lage sind, bei der thermischen Aktivierung der Klebstoffe in hinreichend geringer Verarbeitungszeit eine gute Vernetzung auszubilden und die gewünschten Vorteile hervorzurufen. Zudem können Hydroperoxide bei thermischer Beanspruchung leichtflüchtige primäre Spaltprodukte absondern (siehe auch oben).

Der Klebstoff weist weiterhin eine Polymerkomponente auf, die aus einem einzigen Polymer besteht oder aus mehreren Polymeren zusammengesetzt ist. Mindestens eines der die Polymerkomponente bildenden Polymere ist ein thermoplastisches Polymer, das keine Kohlenstoff-Kohlenstoff-Doppelbindungen besitzt, also ein gesättigtes Polymer ist, wobei zumindest eines der thermoplastischen Polymere ein Polyurethan ist.

Gesättigte thermoplastische Polymere machen mindestens 50 Gew.-% der Polymerkomponente aus und können bis zu 100 Gew.-% der Polymerkomponente betragen, so dass diese in letzterem Fall ausschließlich durch ein oder mehrere gesättigte thermoplastische Polymere gebildet wird. Ist nur ein thermoplastisches Polymer zugegen, so liegt dieses von 50 Gew.-% bis 100 Gew.-% in der Polymerkomponente vor.

Der Klebstoff kann dabei in erster Ausführungsvariante ausschließlich aus der Polymerkomponente und dem bzw. den Peroxid(en) zusammengesetzt sein.

Sehr bevorzugt werden solche Polymere eingesetzt, deren Glasübergangstemperatur nicht mehr als - 25 °C, besonders bevorzugt nicht mehr als - 35 °C beträgt. Alle Angaben zu Glasübergangstemperaturen im Rahmen dieser Schrift beziehen sich auf die Bestimmung der statischen Glasübergangstemperatur $T_G$ mittels Dynamischer Differenzkalorimetrie (DSC) nach DIN 53765, und zwar auf den Glasumwandlungstemperatur-Wert Tg nach DIN 53765:1994-03, sofern im Einzelfall nichts anderes angegeben ist.

Niedrige Glasübergangstemperaturen der eingesetzten Polymere haben sich vorteilhaft auf gute Schockbeständigkeitseigenschaften der mit den entsprechenden Klebefilmen hergestellten Verbunde ausgewirkt.

Geeignete gesättigte thermoplastische Polymere können vorteilhaft gewählt werden aus der Gruppe der Polyolefine (zum Beispiel Ethylen-Vinylacetat-Copolymere (EVA)), der Polyether, der Copolyether, der Polyester, der Copolyester, der Polyamide, der Copolyamide, der Polyacrylsäureester, der Acrylsäureester-Copolymere, der Polymethacrylsäureester, der Methacrylsäureester-Copolymer, der thermoplastische Polyurethane sowie chemisch oder physikalisch vernetzte Stoffe der zuvor genannten Verbindungen, wobei zumindest eines der thermoplastischen Polymere ein Polyurethan ist. Darüber hinaus können auch Blends aus verschiedenen thermoplastischen Polymeren insbesondere aus den vorstehenden Verbindungsklassen eingesetzt werden. Besonders bevorzugt eingesetzt werden semikristalline (teilkristalline) thermoplastische Polymere.

Bevorzugte Beispiele sind - insbesondere semikristalline - Polyolefine. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften des Polymers steuern, wie zum Beispiel die Erweichungstemperatur und/oder spezielle mechanische Eigenschaften

Bevorzugt als thermoplastische Polymere eingesetzt werden können thermoplastische Elastomere, und zwar allein oder auch in Kombination mit einem oder mehreren thermoplastischen Polymeren aus den zuvor vorgenannten Verbindungsklassen, wobei zumindest eines der thermoplastischen Polymere ein Polyurethan ist. Besonders bevorzugt eingesetzt werden gesättigte semikristalline thermoplastische Elastomere.

Besonders bevorzugt sind thermoplastische Polymere mit Erweichungstemperaturen kleiner als 100 °C. In diesem Zusammenhang steht der Begriff Erweichungspunkt für die Temperatur, ab der das thermoplastische Granulat mit sich selbst verklebt. Wenn es sich dabei um semikristalline thermoplastische Polymere handelt, dann weist es vorteilhaft neben seiner - insbesondere wie vorstehend charakterisierten - Erweichungstemperatur (die mit dem Schmelzen der Kristallite zusammenhängt) eine Glasübergangstemperatur von höchstens 25 °C.

Erfindungsgemäße Beispiele für thermoplastische Elastomere im Sinne der thermoplastischen Polymere sind thermoplastische Polyurethane (TPU), wobei zumindest eines der thermoplastischen Polymere ein Polyurethan ist. Polyurethane sind Polykondensate, die typischerweise aus Polyolen und Isocyanaten aufgebaut werden und Weich- und Hartsegmente enthalten. Die Weichsegmente bestehen beispielsweise aus Polyestern, Polyethern, Polycarbonaten, im Sinne dieser Erfindung jeweils bevorzugt aliphatischer Natur, und Polyisocyanathartsegmenten. Je nach Art und Einsatzverhältnis der einzelnen Komponenten sind Materialien erhältlich, die im Sinne dieser Erfindung vorteilhaft eingesetzt werden können. Rohstoffe, die dem Formulierer hierzu zur Verfügung stehen, sind zum Beispiel in EP 894 841 B1 und EP 1 308 492 B1 genannt.

In einer bevorzugten, erfindungsgemäßen Ausführungsform wird ein thermoplastisches Polyurethan ohne C-C-Mehrfachbindungen eingesetzt. Vorzugsweise besitzt das thermoplastische Polyurethan eine Erweichungstemperatur von kleiner als 100°C, insbesondere kleiner als 80°C.

In einer weiteren bevorzugten, erfindungsgemäßen Ausführungsform wird eine Mischung zweier oder mehrerer gesättigter thermoplastischer Polyurethane eingesetzt. Vorzugsweise besitzt die Mischung der thermoplastischen Polyurethane eine Erweichungstemperatur von kleiner als 100°C, insbesondere kleiner als 80°C.

In einer besonders bevorzugten, erfindungsgemäßen Ausführungsform wird Desmomelt® 530 als gesättigtes thermoplastisches Polymer eingesetzt. Desmomelt® 530 ist ein weitgehend lineares, thermoplastisches, stark kristallisierendes Polyurethan-Elastomer, das im Handel bei der Firma Covestro AG (ehemals Bayer Material Science AG) erhältlich ist. Desmomelt kann auch gemeinsam mit anderen Polymeren - insbesondere gesättigten thermoplastischen Polymeren, bevorzugt weiteren gesättigten thermoplastischen Polyurethanen - eingesetzt werden.

In einer bevorzugten Ausführung der Erfindung sind dem Klebstoff zumindest ein klebverstärkendes Additiv - auch als Haftvermittler bezeichnet - zugesetzt. Haftvermittler sind Substanzen, die die Haftkraft des Klebefilms auf dem zu verklebenden Substrat verbessern. Dies kann insbesondere durch eine Erhöhung der Benetzbarkeit der Substratoberflächen und/oder die Ausbildung chemischer Bindungen zwischen der Substratoberfläche und dem Klebstoff beziehungsweise Komponenten des Klebstoffs geschehen.

Eine vorteilhafte Ausführung der Erfindung betrifft einen Klebstoff, der ausschließlich aus der Polymerkomponente, den Peroxiden und dem Haftvermittler - letzterer insbesondere in Form der nachfolgend beschrieben Silane - zusammengesetzt ist, und hier insbesondere derat, dass als Polymerkomponente ausschließlich ein oder mehrere - insbesondere semikritalline - gesättigte thermoplastische Polymere eingesetzt werden.

Als Haftvermittler können vorteilhaft Silanhaftvermittler eingesetzt werden. Als Silanhaftvermittler werden insbesondere Verbindungen der allgemeine Form $RR'_aR''_bSiX_{(3-a-b)}$ genutzt, wobei R, R‘ und R" unabhängig voneinader gewählt sind und jeweils ein an das Si-Atom gebundenes Wasserstoffatom oder einen an das Si-Atom gebundenen organischen funktionalisierten Rest bezeichnen, X eine hydrolysierbare Gruppe bezeichnet, a und b jeweils 0 oder 1 sind, und wobei R, R‘ und R" oder zwei Vertreter dieser Gruppe auch identisch sein können.

Genutzt werden können als Haftvermittler auch Verbindungen, bei denen bei Anwesenheit mehrerer hydrolysierbarer Gruppen X nicht identisch sind, sondern sich voneinander unterscheiden [entsprechend der Formel $RR'_aR''_bSiXX'_cX''_d$ , mit X, X’, X" als unabhängig voneinander gewählten hydrolysierbaren Gruppen (von denen wiederum

aber auch zwei identisch sein können), c und d jeweils 0 oder 1 sind, mit der Maßgabe, dass a + b + c + d = 2 ist].

Als hydrolysierbare Gruppen werden insbesondere Alkoxygruppen genutzt, so dass insbesondere Alkoxysilane als Haftvermittler eingesetzt werden. Bevorzugt sind die Alkoxygruppen eines Silanmoleküls gleich, sie können prizipiell aber auch unterschiedlich gewählt werden.

Als Alkoxygruppen werden beispielsweise Methoxygruppen und/oder Ethoxygruppen gewählt. Methoxygruppen sind reaktiver als Ethoxygruppen. Methoxygruppen können daher eine bessere Haftvermittlungswirkung durch schnellere Reaktion mit den Substratoberflächen aufweisen und daher gegebenenfalls die eingesetzte Menge reduziert werden. Ethoxygruppen haben hingegen den Vorteil, dass sie aufgrund der geringeren Reaktivität einen geringeren (gegebenenfalls negativen) Einfluss auf die Verarbeitungszeit besitzen, insbesondere auch in Hinblick auf die gewünschte Feucht-Wärme-Stabilität.

Bevorzugt werden als Haftvermittler Trialkoxisilane $R\text{-}SiX_3$ eingesetzt. Beispiele für erfindungsgemäß geeignete Trialkoxysilane sind

Trimethoxysilane - wie N-(2-Aminoethyl)-3-aminopropyl-trimethoxysilan, N-Cyclohexyl-3-aminopropyl-trimethoxysilan, 3-Aminopropyl-trimethoxysilan, 3-Ureidopropyl-trimethoxysilan, Vinyltrimethoxysilan, 3-Glycidoxypropyl-trimethoxysilan, 3-Methacryloxypropyl-trimethoxysilan, Methacryloxymethyl-trimethoxysilan, N-Methyl-[3-(Trimethoxysilyl)propyl]carbamat, N-Trimethoxysilylmethyl-O-methylcarbamat, Tris-[3-(trimethoxysilyl)propyl]-isocyanurat, 3-Glycidoxypropyl-trimethoxysilan, Methyltrimethoxysilan, Isooctyltrimethoxysilan, Hexadecyltrimethoxysilan, 3-Mercaptopropyl-trimethoxysilan, 3-Aminopropyl-trimethoxysilan, N-(2-Aminoethyl)-3-Aminopropyl-trimethoxysilan, N-Phenyl-3-aminopropyl-trimethoxysilan, N-Ethyl-3-aminoisobutyl-trimethoxysilan, Bis-[3-(trimethoxysilyl)propyl]amin, 3-Isocyanatopropyltrimethoxysilan, 2-(3,4-Epoxycyclohexyl)-ethyl-trimethoxysilan; 3-Methacryloxypropyltrimethoxysilan, 3-Methacrylamidopropyl-trimethoxysilan, p-Styryltrimethoxysila, 3-Acryloxypropyl-trimethoxysilan, N-(Vinylbenzyl)-2-aminoethyl-3-aminopropyltrimethoxysilan hydrochlrid -,

Triethoxysilane - wie N-Cyclohexyl-aminopropyl-triethoxysilan, 3-Aminopropyl-triethoxysilan, 3-Ureidopropyl-triethoxysilan, 3-(2-Aminomethyl-amino)propyl-triethoxysilan, Vinyltriethoxysilan, 3-Glycidoxypropyl-triethoxysilan, Methyltriethoxysilan, Octyltriethoxysilan, Isooctyltriethoxysilan, Phenyltriethoxysilan, 1,2-Bis(triethoxysilan)ethan, 3-Octanonylthio-1-propyl-triethoxysilan; 3-Aminopropyl-triethoxysilan, Bis-[3-(triethoxysilyl)propyl]amin, 3-Isocyanatopropyl-triethoxysilan, 2-(3,4-Epoxycyclohexyl)-ethyl-triethoxysilan, 3-Methacryloxypropyl-triethoxysilan, 3-Methacrylamidopropyl-triethoxysilan, 3-Triethoxysilyl-N-(1,3-dimethylbutadien)propylamid -, Triacetoxysilane - wie Vinyltriacetoxysilan, 3-Methacryloxypropyl-triacetoxysilan, Triacetoxyethylsilan -,

gemischte Trialkoxysilane - wie 3-Methacrylamidopropyl-methoxy-diethoxysilan, 3-Methacrylamidopropyl-dimethoxy-ethoxysilan -.

Beispiele für erfindungsgemäß geeignete Dialkoxysilane sind

Dimethoxysilane - wie N-(2-Aminoethyl)-3-aminopropyl-methyldimethoxysilan, Vinyldimethoxymethylsilan, (Methacryloxymethyl)-methyldimethoxysilan, Methacryloxymethyl-methyldimethoxysilan, 3-Methacryloxypropyl-methyldimethoxysilan, Dimethyldimethoxysilan, (Cyclohexyl)methyldimethoxysilan, Dicyclopentyl-dimethoxysilan, 3-Glycidoxypropylmethyldimethoxysilan, 3-Mercaptopropyl-methyldimethoxysilan -,

Diethoxysilane - wie Dimethyldiethoxysilan, Gamma-Aminopropyl-methyl-diethoxysilan; 3-Glycidoxypropyl-methyldiethoxysilan, 3-Methacryloxypropyl-methyldiethoxysilan -.

Ein Beispiel für ein Monooxysilan ist Trimethyloxysilan.

Die Menge zugesetzten Haftvermittler kann grundsätzlich in einer großen Bandbreite gewählt werden, je nach den gewünschten Eigenschaften des Produktes und unter Berücksichtigung der gewählten Rohstoffe des Klebefilms. Es hat sich als erfindungsgemäß jedoch sehr vorteilhaft herausgestellt, wenn die Menge des eingesetzten Haftvermittlers, bezogen auf den eingesetzten Klebstoff, im Bereich von 0,5 bis 20 Gew.-%, bevorzugt im Bereich von 1 bis 10 Gew.-%, besonders bevorzugt von 1,5 bis 5 Gew.-%, ganz besonders bevorzugt im Bereich von 2,5 bis 3,5 Gew.-% gewählt werden.

Sehr hohe Mengen an eingesetzten Haftvermittlern können eine stark weichmachende Wirkung haben, so dass es - insbesondere in Hinblick auf hinreichend stabile Filme - vorteilhaft sein kann, die Menge an Haftvermittler möglichst gering zu wählen, so dass zwar einerseits der gewünschte positive Einfluss auf die Feucht-Wärme-Beständigkeit hinreichend groß ist, andererseits die Eigenschaften des Klebefilms in Hinblick auf dessen Formbeständigkeit und Stabilität nicht zu negativ beeinflusst werden.

Klebefilme

Der als schichtförmig ausgeformte erfindungsgemäße Klebstoff bildet besonders bevorzugt einen Klebefilm

oder ist - neben einer oder mehreren weiteren Schichten - Teil eines Klebefilms. Von der Erfindung umfasst werden somit auch Klebefilme aus dem erfindungsgemäßen Klebstoff und Klebefilme umfassend eine Schicht aus dem erfindungsgemäßen Klebstoff.

Die erfindungsgemäßen Klebefilme können einschichtig - das heißt allein aus der Schicht des zugrundeliegenden Klebstoff - oder auch mehrschichtig aufgebaut sein, etwa mit einer Verstärkungs- beziehungsweise Trägerschicht versehen sein. Vorteilhaft sind einschichtige Systeme, sogenannte Transferklebebänder.

Als Träger können prizipiell alle Schichten aus die dem Fachmann hierfür geeigneten Materialien genutzt werden, je nach gewüschten Eigenschaften des Produktes und Beständigkeit bei der thermischen Aktivierung. So können beispielweise Trägermaterialien wie textile Materialien, Gewebe, Vliese, Papiere, Kunstofffolien, wie beispielweise mono- oder biaxial gereckte, gegebenenfalls orientierte Polyolefine, Polyvinylchlorid-Folien (PVC), Polypropylen-Folien, Polyethylen (PE)-Folien, wie HDPE, LDPE), Polyethylenterephthalat-Folien (PET), Polylactid-Folien sowie Schäume und Gewebe eingesetzt werden. Trägermaterialien können hohe oder geringe Dehnungsfähigkeit und/oder Flexibilität haben und beispielsweise reißfest oder leicht einreißbar gewählt werden. Als Träger können grundsätzlich ebenfalls geeignete - insbesondere kohäsive - Kautschukfilme oder Klebmassenschichten, wie etwa Haftklebmassen oder aktivierbare Klebmassen, genutzt werden, die eine entsprechende Eigenstabilität mitbringen und den Anforderungen an die Verklebungsbedingungen der Klebefilme genügen.

Die Klebefilme können ein- oder beidseitig mit einem schützenden Material abgedeckt sein, sogenannten "Linern". Liner dienen dem temporären Schutz und der Handhabbarkeit des Klebebandes werden für die Applikation wieder entfernt. Im Sinne der vorliegenden Erfindung werden solche Liner als prozessuale Hilfsmittel, nicht aber als eigentlicher Teil der erfindungsgemäßen Klebefilme angesehen. Bei Linern kann es sich um Papier oder Folienhandeln, die zumindest auf der zum erfindungsgemäßen klebefilm gerichteten Seite mit einem Trennmittel ausgerüstet sind. Es kann sich dabei auch um Papier oder Folien handeln, die leicht haftklebrig ausgerüstet sind (sogenannte Tackyliner).

Erfindungsgemäß können auch Laminatklebebänder, also Klebebänder aus einer Mehrzahl aufeinander angeordneter Klebeschichten, angeboten werden. Laminate sind beispielsweise vorteilhaft, wenn dickere trägerlose Klebebänder durch einfache Prozesse hergestellt werden sollen, da es in der Regel einfacher ist, dünne Klebeschichten zu produzieren und diese dann miteinander zu laminieren, als Klebeschichten der resultierenden Gesamtdicke direkt zu einem gleichmäßigen, homogenen Produkt zu beschichten.

Erfindungsgemäße Klebeschichten, Transferklebebänder und Laminatklebebänder können dabei von sehr dünnen Ausführungen - im Bereich weniger Mikrometer - bis hin zu sehr dicken Schichten - im Bereich mehrerer Zentimeter - ausgestaltet werden. Entsprechend können mehrschichtige Klebebänder - insbesondere auch solche, die neben den Klebeschichten weitere Schichten umfassen - in ihrer Dicke variieren, gegeben durch die jeweilige Dicke der Klebeschichten - wie vorstehend beschrieben - und der verwendeten weiteren Schichten, wie Trägerschichten, Haftklebmassen, funktionelle (Bsp.: thermisch oder elektrisch leitende) Schichten, Primerschichten und dergleichen.

Typische Schichtdicken für erfindungsgemäße Einschicht-Klebefilme liegen im Bereich von 1 bis 250 $\mu$m, beispielsweise 5, 20, 25, 50, 75, 100, 125, 150, 175 oder 200 $\mu$m.

Bei Laminat-Klebebändern sind entsprechend höhere Schichtdicken möglich, beispielweise im Bereich von 5 $\mu$m bis 5 mm oder auch mehr.

Die erfindungsgemäßen Klebefilme sind selbsttragend und somit eigenständige Produkte, das heißt sie können ohne weiteres gelagert, transportiert und appliziert werden. Dies unterscheidet sie wesentlich von "Klebefilmen" aus Flüssigklebern, also Klebstoffschichten, die nur nach Auftragung auf das jeweilige zu verklebende Substrat existieren und dort - im Rahmen ihrer Applikation bei der Verwendung - verfestigt werden, aber nicht wieder als eigenständiges Produkt vom Substrat abgenommen werden. So können erfindungsgemäße Klebefilme etwa zur Rolle aufgewickelt werden oder als Abschnitte, Stanzlingen oder sogenannte Die-Cuts angeboten werden. Entsprechend sind auch beliebige Zuschnitte und Stanzlinge erfindungsgemäßer Klebefilme Gegenstand der Erfindung.

Die erfindungsgemäßen Klebefilme weisen ein sehr breites Anwendungsfenster auf, um Verklebungen mit den gewünschten Qualitäten zu erzielen. Gegenüber solchen bei niedrigen Temperaturen aktivierbaren Klebefilmen, wie der Stand der Technik sie offenbart - vergleiche hierzu etwa die WO 93/25599 A und die DE 10 2010 013 145 A - können sehr viel kürzere Taktzeiten realisiert werden, in deren Grenzbereichen die Klebefilme des Standes der Technik bereits nicht mehr zur erforderlichen Performance führen.

Die wirksame Verklebung mittels der Klebefilme unter deren Aktivierung bedeutet ein Zusammenwirken aus Temperatur, Zeit (Taktzeit), je niedriger einer der Parameter gewählt wird, desto höher kann oder muss ein anderer Parameter gewählt werden. Mit höheren Temperaturen lassen sich etwa niedrigere Taktzeiten realisieren. Kann die Taktzeit länger eingestellt werden, so ist es möglich, bei niedrigerer Temperatur zu arbeiten.

Der Verpressdruck stellt in diesem Zusammenhang in erster Linie einen Prozessparameter dar und ist von den verwendeten Rohstoffen der Formulierung in Kombination mit der Taktzeit abhängig. So kann durch einen erhöhten Druck das Auffließen auf die Substrate sowie die Benetzung der Substrate bei Formulierungen mit erhöhter Schmelzviskosität in Kombination mit kurzen Taktzeiten begünstigt werden. Bei Formulierungen mit geringerer Schmelzviskosität, insbesondere in Kombination mit längeren Taktzeiten, kann ein niedrigerer Druck vorteilhaft sein, um ein ungewolltes

Ausquetschen (sogenanntes Oozing) des Klebstoffs aus der Klebefuge zu verhindern. Für die hier ermittelten, vorteilhaften und erfindungsgemäßen Formulierungen konnte beispielsweise vorteilhaft mit einem Pressdruck von 10 bar gearbeitet werden, wobei die Erfindung jedoch nicht auf diesen Pressdruck beschränkt ist.

Insbesondere die Kontaktzeit bei der Aktivierung des Klebefilms (die Aktivierungszeit) kann durch Variationsmöglichkeiten der anderen Parameter in den noch zur Verfügung stehenden Parametergrenzen, die durch die Beständigkeit der zu verklebenden Substrate gegeben werden, erheblich reduziert werden.

Grundsätzlich wird die maximal erlaubte Temperatur durch die zu verklebenden Substrate bestimmt. Für viele der angestrebten Anwendungen (etwa die Verklebung von Kunststoffen und/oder anodisierten Substraten) sollte die Temperatur nicht höher als 200 °C gewählt werden, um die Substrate nicht zu schädigen. Dabei gilt grundsätzlich, dass die Taktzeit desto kürzer sein sollte, je höher die gewählte Temperatur ist, um die Substrate einem minimalen schädigenden Wärmeeinfluss einzusetzen. Erfindungsgemäß ist es gelungen, die Taktzeit auf weniger als 10 s bei einer Temperatur von 200 °C, und auf 10 s bei 190 °C (je Druck 10 bar) zu reduzieren. Bei Temperaturen unterhalb von 170 °C hingegen können maximale Taktzeiten von bis zu einer Minute, vorteilhaft bis zu 30s, akzeptabel sein. Generell ist eine möglichst kurze Taktzeit bei einer maximal möglichen Temperatur, abhängig von der Sensibilität der zu fügenden Substrate, vorteilhaft, um die Produktivität im Verarbeitungsprozess zu erhöhen.

Die erfindungsgemäßen Klebefilme sind gut lagerbar, ohne dabei ihre positiven Eigenschaften als Klebefilme zu verlieren. Insbesondere hat sich herausgestellt, dass die erfindungsgemäßen Klebefilme selbst nach sechswöchiger Lagerung Klebefestigkeiten zu einem Substrat herzustellen vermögen, die noch mindestens 90 % der Klebefestigkeiten der frisch hergestellten Klebefilme - die insbesondere nicht länger als einen Tag gelagert wurden - betragen.

Zudem hat sich herausgestellt, dass die erfindungsgemäßen Klebefilme einen weiteren Vorteil mitbringen: die Verklebungen mittels latent-reaktiver Klebefilme - auch auf Polyurethanbasis - nach dem Stand der Technik, wie etwa in den bereits genannten WO 93/25599 A und DE 10 2010 013 145 A beschrieben, weisen regelmäßig eine begrenzte Beständigkeit unter feucht-warmen Bedingungen auf. Die hängt damit zusammen, dass Feuchtigkeit mit der Zeit in die Klebefuge zwischen Substratoberfläche und Klebefilm einzudringen vermag und die Klebeverbindung somit schwächt. Mit den erfindungsgemäßen Klebefilmen lassen sich dementgegen Verklebungen erzielen, die auch über einen längeren Zeitraum hervorragende Beständigkeiten unter feucht-warmen Bedingungen besitzen.

Die Feucht-Wärme-Beständigkeit kann dadurch noch optimiert werden, dass dem Klebstoff, der zur Herstellung des erfindungsgemäßen latent-reaktiven Klebfilms genutzt wird, ein oder mehrere Haftvermittler zugesetzt werden. Als Haftvermittler können dabei Substanzen eingesetzt werden, die die Adhäsion des Klebefilms zur Substratoberfläche verbessern.

Als quantitatives Kriterium für die Verklebungseigenschaften eines Klebefilms wird insbesondere der sogenannte Push-Out-Test angesehen. Für den Push-Out-Test wird ein scheibenförmiges Substrat mit einer Klebefilmprobe auf einem zweiten, rahmenförmigen Substrat verklebt und dann die Kraft ermittelt, die aufgebracht werden muss, um die beiden Substrate wieder voneinander zu trennen (vergleiche hierzu die näheren Details weiter hinten in dieser Schrift; Testmethode A).

In bevorzugter Weise weisen die erfindungsgemäßen Klebefilme eine gute Verklebungsfestigkeit auf. Zur Quantifizierung der Verklebungsfestigkeit dient das Ergebnis des Push-Out-Tests. Bevorzugt weisen die erfindungsgemäßen Klebefilme als Frischprobe (frisch beschichteter Klebefilm nach Trocknung für 30 min bei 70°C in einem geeigneten Umlufttrockenschrank und anschließender, 24 h Konditionierung im Normklima (23 °C / 50 % r.F.) im Push-Out-Test (Kraftmessung zur Lösung eines Klebeverbundes aus einer Polycarbonatscheibe (Makrolon 099) mit einem Rahmen aus anodisiertem Aluminium (E6EV1) mittels einer Schicht des zu untersuchenden Klebefilms von 100 $\mu$m Dicke bei einer effektiven Verklebungsfläche von 282 $mm^2$ [vergleiche für nähere Details auch Tests A und B ] einen Kraftwert von mindestens 3 MPa, bevorzugt von mindestens 4 MPa, auf, und zwar bevorzugt in nach Verklebung unter den folgenden Verklebungsbedingungen I, weiter bevorzugt auch nach den folgenden Verklebungsbbedingungen II, und noch weiter bevorzugt auch unter den folgenden Verklebungsbedingungen III:

I. Vorlaminierung 70 °C, 15 s; Endverklebung (Verpressbedingungen) 190 °C, 10 s; 10 bar; Konditionierung des Klebeverbundes für 24 h bei 23 °C / 50 % r.F. [r.F. steht für relative Luftfeuchtigkeit]; Austestung jeweils bei 23 °C, 50 % r.F.

II. Vorlaminierung 70 °C, 15 s; Endverklebung (Verpressbedingungen) 180 °C, 12 s; 10 bar; Konditionierung des Klebeverbundes für 24 h bei 23 °C / 50 % r.F.; Austestung jeweils bei 23 °C, 50 % r.F.

III. Vorlaminierung 70 °C, 15 s; Endverklebung (Verpressbedingunegn) 170 °C, 30 s; 10 bar; Konditionierung des Klebeverbundes für 24 h bei 23 °C / 50 % r.F.; Austestung jeweils bei 23 °C, 50 % r.F.

In weiter sehr bevorzugter Weise weisen die erfindungsgemäßen Klebefilme zudem eine gute Feucht-Wärmebeständigkeit auf. Zur Quantifizierung der Feucht-Wärmebeständigkeit kann ebenfalls der Push-Out-Test, und zwar nach definierter Lagerung (72 h bei 85 °C und 85 % r,F,) des zu untersuchenden, mittels des erfindungsgemäßen Klebefilms hergestellten Klebeverbundes herangezogen werden. Die Details dieses Tests sind im experimentellen Teil

(Testmethoden A und B) detailliert beschrieben.

Die erfindungsgemäßen Klebefilme weisen im Push-Out-Test auch nach Feucht-Wärme-Lagerung (Kraftmessung zur Lösung eines Klebeverbundes aus einer Polycarbonatscheibe (Makrolon 099) mit einem Rahmen aus anodisiertem Aluminium (E6EV1) mittels einer Schicht des zu untersuchenden Klebefilms von 100 μm Dicke bei einer effektiven Verklebungsfläche von 282 $mm^2$ einen Kraftwert von mindestens 3 MPa auf, und zwar bevorzugt in allen drei Fällen nach Verklebung unter den vorgenannten Verklebungsbedingungen I, II und III.

Bevorzugt sollte zudem - in Kombination mit den vorgenannten Mindestwerten - die Verklebungsfestigkeit - im Sinne des vorgenannten Push-Out-Kraftwertes - des feuchtwärmegelagerten Klebeverbundes dabei mehr als 50 % des nicht feuchtwärmegelagerten Klebeverbundes betragen, mehr bevorzugt sollte die Verklebungsfestigkeit des feuchtwärmegelagerten Klebeverbundes mehr als 75 % des nicht feuchtwärmegelagerten Klebeverbundes betragen, und sehr bevorzugt sollte die Verklebungsfestigkeit des feuchtwärme-gelagerten Klebeverbundes mehr als 90 % des nicht feuchtwärmegelagerten Klebeverbundes betragen oder übersteigt sogar den Wert des nicht feuchtwärmegelagerten Verbundes.

Als latent-reaktive Klebstoffsysteme werden solche aktivierbaren Klebstoffe bezeichnet, die ohne Aktivierung über längere Zeiträume stabil lagerbar sind. Bevorzugte latent-reaktive Klebefilme sind solche, die bei Normalklima (23 °C [296,15 K]; 50 % r.F.) nicht oder nur über einen Zeitraum von Monaten aushärten und damit lagerstabil sind, die aber - zum Beispiel bei deutlich höheren Temperaturen - aktivierbar sind (vergleiche hierzu auch den Test "Latenz" im experimentellen Teil) und aushärten und/oder vernetzen. Die latente Reaktivität bietet den Vorteil, dass diese Klebefilme bei Normalklima gelagert, transportiert und weiter verarbeitet (beispielweise konfektioniert) werden können, bevor sie dann an der Verklebungsstelle zum Einsatz kommen und ausgehärtet werden.

Dabei sollen sich die Klebstoffe während der Lagerzeit nicht signifikant verändern, so dass die Verklebungseigenschaften eines frisch nach der Herstellung zur Verklebung angewendeten Klebstoffsystems und eines nach längerer Lagerung für die ansonsten vergleichbare Verklebung angewendeten Klebstoffsystems nicht wesentlich unterscheiden. Auch die Latent-Reaktivität (im Rahmen der Schrift auch als Latenz bezeichnet) der Klebefilme lässt sich über den Push-Out-Test quantifizieren.

Im Sinne der vorliegenden Schrift gelten Klebefilme insbesondere dann als latent-reaktiv, wenn eine nach a) 18 Wochen bei Laboratorium-Normklima (23 °C [296,15 K]; 50 % r.F.), bevorzugt auch eine nach b) bei 40 °C in einem handelsüblichen, geeigneten Umlufttrockenschrank (Trockenschrank steht im Normklima), jeweils gelagerte Klebefilm-Probe im Vergleich zu einer im Übrigen identischen Frischprobe im Push-Out-Test (Kraftmesssung zur Lösung eines Klebeverbundes aus einer Polycarbonatscheibe (Makrolon 099) mit einem Rahmen aus anodisiertem Aluminium (E6EV1) mittels einer Schicht des zu untersuchenden Klebefilms bei einer effektiven Verklebungsfläche von 282 $mm^2$ nicht mehr als 10 % Einbuße aufweist und zwar bevorzugt in allen drei Fällen nach Verklebung unter den vorgenannten Verklebungsbedingungen I, II und III.

Weiter bevorzugt sind die Klebstofffilme auch in Bezug auf das Feuchtwärme-Verhalten beständig, weisen also im Push-Out-Test des Klebeverbundes auch nach längerer Lagerung des Klebefilms vor Herstellung des Verbundes [zumindest nach Lagerung a) 18 Wochen bei Laboratorium-Normklima (23 °C [296,15 K]; 50 % r.F.), bevorzugt auch nach alternativer Lagerung b) bei 40 °C in einem handelsüblichen, geeigneten Umlufttrockenschrank (Trockenschrank steht im Normklima)], und nach weiterer Feuchtwärmelagerung (72 h bei 85 °C und 85 % r.F.) des hergestellten Klebeverbundes nur zulässige Abweichungen zu den entsprechenden Werten eines Klebeverbundes aus entsprechend gelagerten Klebefilmen, aber ohne Feuchtwärme-Lagerung des Verbundes, auf.

Feucht-Wärme-Beständigkeit auch der langzeitgelagerten Klebefilme liegt - entsprechend bereits oben genannter Kriterien - wiederum vor, wenn die Verklebungsfestigkeit des feuchtwärmegelagerten Klebeverbundes mehr als 50 % des nicht feuchtwärmegelagerten Klebeverbundes beträgt, als gute Feucht-Wärme-Beständigkeit angesehen, wenn die Verklebungsfestigkeit des feuchtwärme-gelagerten Klebeverbundes mehr als 75 % des nicht feuchtwärmegelagerten Klebeverbundes beträgt, und eine sehr gute Feucht-Wärme-Beständigkeit liegt vor, wenn der Wert der Verklebungsfestigkeit des feuchtwärmegelagerten Verbundes mindestens 90 % des Wertes der nicht gelagerten Probe übersteigt.

Die Bestimmung der Verklebungsfestigkeit entspricht dabei dem bereits genannten Push-Out-Test.

Die erfindungsgemäßen Klebefilme sind grundsätzlich zum Verkleben aller Substrate geeignet, und zwar sowohl starrer als auch flexibler Materialien. Die zu verklebenden Substrate können diverse Ausgestaltungen, Dicken und dergleichen haben. Beispielhaft genannt seien hier Glas, Kunststoffe aller Art, Metall, Keramik, Textilien, Stoffe aller Art, Kunstleder ... jeweils mit demselben Material und auch untereinander.

Optional können dem für die erfindungsgemäßen Klebefilme verwendeten Klebstoff Klebharze zugesetzt sein. Unter der Bezeichnung "Klebharz", englisch "Tackifier Resins", versteht der Fachmann einen Stoff auf Harzbasis, der die Verklebungsfestigkeit weiter erhöht. Als Klebrigmacher können die üblichen Klebharze wie z.B. Kohlenwasserstoffharze, Polyterpenharze und Terpenphenolharze sowie Kolophonium und Kolophoniumderivate eingesetzt werden. Die Rezeptierung erfolgt nach den allgemeinen Regeln. Auf die Darstellung des Wissensstandes zu Klebharzen im "Handbook of Pressure Sensitive Adhesive Technology" von Donatas Satas (van Nostrand, 1989) (Kapitel 25) sei hingewiesen.

Beliebige Kombinationen dieser oder anderer Klebharze können eingesetzt werden, um die Eigenschaften des resultierenden Klebstoffs und der daraus erhältlichen Klebefilme wunschgemäß einzustellen.

Der Klebestoff kann darüber hinaus weitere Formulierungsbestandteile enthalten. Dazu zählen beispielweise Füllstoffe und/oder Additive, wie zum Beispiel thermisch und/oder elektrisch leitende Additive, Pigmente, Farbstoffe, Katalysatoren, Alterungsschutzmittel, Lichtschutzmittel, Prozesshilfsmittel und weitere Stoffe zur Einstellung spezieller Klebeeigenschaften, wobei diese Aufzählung nicht als abschließend zu betrachten ist.

Experimenteller Teil

Mit den im Folgenden dargestellten Prüfmethoden werden die erfindungsgemäßen Klebefilmproben sowie die Vergleichsproben evaluiert.

**Push-Out-Test:**

Der Push-Out-Test ermöglicht Aussagen über die Verklebungsfestigkeit eines Klebeprodukts in Richtung der Klebschichtnormalen. Bereitgestellt werden ein kreisförmiges erstes Substrat (1) (Polycarbonat, Macrolon 099, Dicke 3 mm) mit Durchmesser 21 mm, ein zweites Substrat (2) (anodisiertes Aluminium, E6EV1, Dicke 1,5 mm) - beispielsweise quadratförmig mit 40 mm Seitenlänge - mit einer kreisförmigen, zentral angeordneten Öffnung (Bohrung) von 9 mm Durchmesser sowie die zu untersuchenden Klebefilmprobe, die ebenfalls kreisförmig mit 21 mm Durchmesser konfektioniert (zugeschnitten oder gestanzt) wurde (vergleiche Figur 5)

Aus den vorgenannten drei Bauteilen wird ein Prüfkörper hergestellt, indem das Klebeprodukt mit der freien Oberfläche passgenau auf das Substrat (1) vorlaminiert (bei 70 °C für 15 s) wird. Dann wird der temporäre Träger entfernt und dieser Verbund mit der nun freiliegenden Seite des Klebeproduktes auf das Substrat 2 konzentrisch vorlaminiert (ebenfalls bei 70 °C für 15 s), also derart, dass die kreisrunde Aussparung des Substrats 2 genau mittig über dem kreisrunden ersten Substrat 1 angeordnet ist (Verklebungsfläche somit 282 $mm^2$). Es wird darauf geachtet, dass die Gesamtzeit der Temperatureinwirkung (70 °C) im Vorlaminierprozess 30 s nicht überschreitet. Anschließend wird der Gesamtverbund unter Druck und Temperatureinwirkung verpresst, wobei der Prüfkörper entsteht. Die Verpressbedingungen werden in der Auswertung angegeben.

Die Prüfkörper werden nach dem Verpressen für 24 h bei 23 °C und 50 % relativer Luftfeuchtigkeit (rF) (Standard-Prüfklima) gelagert (Rekonditionierung).

Die Austestung erfolgt wie folgt: Eine Zugprüfmaschine wird mit einem zylindrischen Stempel (Stahl, Durchmesser 7 mm) ausgerüstet und der Prüfkörper über Substrat (2) in eine Halterung der Zugprüfmaschine eingespannt, so dass Substrat (1) nur durch die Verklebung gehalten wird und durch hinreichenden Druck durch Lösung der Verklebung abgelöst werden kann. Die Probe wird derart fixiert, dass ein durch die Krafteinwirkung während der Prüfung mögliches Verbiegen von Substrat (2) minimiert wird. Mittels des zylindrischen Stempels wird durch das Loch in Substrat (2) senkrecht (also parallel entgegengerichtet zum Normalenvektor der Klebeproduktoberfläche) und zentrisch auf die freiliegende Fläche des Klebeproduktes mit einer konstanten Geschwindigkeit von 10 mm/s gedrückt, die Austestungen finden im Standard-Prüfklima (23 °C bei 50 % rF) statt.

Aufgenommen wird diejenige Kraft, bei der die Verklebung versagt und Substrat (1) von Substrat (2) gelöst wird (Lösung der Klebeverbindung, erkennbar durch plötzlichen Kraftabfall). Die Kraft wird auf die Verklebungsfläche normiert ($N/mm^2$ beziehungsweise MPa). Aufgrund der natürlich hohen Streuung der Einzelergebnisse, durch das meist auftretende Adhäsionsversagen (Versagen an der Grenzfläche Substrat - Klebefilm), wird der arithmetische Mittelwert aus drei Einzelprüfungen berechnet.

**Feucht-Wärme-Beständigkeit:**

Die Prüfkörperpräparation und Prüfung erfolgt analog Push-Out-Test, jedoch werden die Prüfkörper nach dem Verpressen für 24 h bei 23 °C und 50 % relativer Luftfeuchtigkeit (rF) (Standard-Prüfklima) gelagert und anschließend aufrecht stehend (auf einer der 40 mm Längsseiten der Grundplatte) einer Feucht-Wärme-Lagerung (72 h bei 85 °C und 85 % rF) unterzogen und vor Prüfung wieder 24 h bei 23 °C und 50 % rF rekonditioniert. Sollte das Substrat 1 während der Feucht-Wärme-Lagerung vom Substrat 2 abrutschen (oder die Substrate erkennbar gegeneinander verrutschen), hat die Probe versagt und es besteht keine ausreichende Feucht-Wärme-Beständigkeit.

Die oben genannten Kriterien zu Feucht-Wärme-Beständigkeit werden als Maßstab herangezogen (Feucht-Wärme-Beständigkeit: Push-Out-Wert des feuchtwärme-gelagerter Klebeverbundes beträgt mehr als 50 % des nicht feuchtwärmegelagerten Klebeverbundes; gute Feucht-Wärme-Beständigkeit: Push-Out-Wert des feuchtwärme-gelagerter Klebeverbundes beträgt mehr als 75 % des nicht feuchtwärmegelagerten Klebeverbundes; sehr gute Feucht-Wärme-Beständigkeit: Push-Out-Wert des feuchtwärme-gelagerter Klebeverbundes beträgt mehr als 90 % des nicht feuchtwärmegelagerten Klebeverbundes oder übersteigt sogar den Wert des nicht feuchtwärmegelagerten Verbundes).

**Latenz:**

Ein Teil der latent reaktiven Klebefilme werden vor der Herstellung der verklebten Prüfkörper für 18 w bei 40 °C in einem im Normklima befindlichen Trockenschrank, ein anderer Teil bei Normklima gelagert und anschließend jeweils der Push-Out-Test und die Feucht-Wärme-Beständigkeit bewertet. Die oben genannten Kriterien zu Latenz und Feucht-Wärme-Beständigkeit werden als Maßstab herangezogen.

**Prozess- / Applikationsfenster:**

Die reaktiven Klebefilme werden unter verschiedenen Verpressbedingungen (Variation von Taktzeit = Aktivierungszeit und Temperatur) bezüglich der Push-Out-Performance bewertet. Das Prozessfenster wird definiert durch ein Zeit-Temperatur-Fenster, in dem die ermittelten Push-Out-Werte höchstens 25 % von dem ermittelten Push-Out-Maximalwert abweichen. Die tatsächlich realisierbare maximale Aktivierungszeit kann zur Feststellung des Maximalwertes über die vorgesehene maximale Taktzeit hinausgehen.

**Shock-Performance**

Aus dem zu untersuchenden hitzeaktivierbaren Klebefilm wird ein Prüfkörper, hergestellt aus den Substraten 1 und 2 wie unter "Push-Out-Test beschrieben, und unter definierten Bedingungen an einer Heißpresse verklebt (siehe bei den einzelnen Messungen).

Die Vorlamination auf die Polycarbonatscheibe (Substrat 1; Makrolon 099, gratfrei gefräst, 21 mm Durchmesser, 3 mm Dicke) findet mittels Heizplatte bei 70°C statt.

Der einseitig eingedeckte, hitzeaktivierbare Klebefilm wird mit der eingedeckten Seite nach unten auf die Heizplatte gelegt.

Durch das Erwärmen auf der Heizplatte werden die hitzeaktivierbaren Filme haftklebrig / tackig und das Substrat 1 kann mit leichtem Andruck innerhalb von 3 bis 5 s auf den Klebefilm vorlaminiert werden, wobei die Gesamtzeit der thermischen Belastung 30 s nicht überschreitet. Nach dem Abkühlen wird der Verbund von Substrat 1 und Klebefilm möglichst genau mit einer Schere ausgeschnitten.

Substrat 2 (Grundplatte - 40 mm x 40mm anod. Aluminiumblech mit einer zentralen gratfreien Bohrung von 9 mm Durchmesser, 1 mm Dicke) wird danach zum Vorheizen für 1-2 Minuten auf die Heizplatte gelegt und zum Vorlaminieren heruntergenommen.

Der verbleibende Liner wird von dem Verbund Substrat 1-Klebefilm abgezogen und exakt zentriert auf die vorgeheizte Aluminium-Grundplatte (Substrat 2) gelegt und mittels leichtem Andruck fixiert. Der fertig vorlaminierte Prüfkörper wird anschließend mit einer geeigneten Laborpresse bei entsprechend eigenstellten Parametern (Zeit, Druck, Temperatur) verpresst, wobei der Temperatureitrag durch die nach oben gerichtete Aluminium Grundplatte erfolgt.

Nach dem Verpressen werden die Prüfkörper für 24 Stunden bei 23 °C / 50 % relativer Feuchte konditioniert.

Unmittelbar nach der Lagerung wird der Klebeverbund in eine Probenhalterung gespannt, dass der Verbund waagerecht ausgerichtet ist.

Der Prüfkörper wird mit der Polycarbonatscheine (Substrat 1) nach unten in die Probenhalterung eingelegt. Die Probenhalterung wird anschließend in die vorgesehene Aufnahme des "DuPont Impact Tester" zentrisch eingesetzt. Der 360g schwere Schlagkopf wird so eingesetzt, dass die kreisförmige abgerundete Aufschlaggeometrie mit dem Durchmesser von 5 mm auf die Verklebungsseite des Substrats 1 zentrisch und bündig aufliegt.

Auf den so angeordneten Verbund aus Probenhalterung, Probe und Schlagkopf wird senkrecht ein an zwei Führungsstangen geführtes Gewicht mit einer Masse von 800g aus einer Höhe von 5 cm fallengelassen (Messbedingungen 23 °C, 50 % relative Feuchte). Die Höhe des Fallgewichtes wird in 5 cm Schritten so lange erhöht bis die eingebrachte Stoßenergie die Probe durch die Schlagbelastung zerstört und die Polycarbonat-Scheibe (Substrat 1) sich von der Grundplatte (Substrat 2) löst.

Um Versuche mit unterschiedlichen Proben vergleichen zu können, wird die Energie wie folgt berechnet:

$$E\,[J] = \text{Höhe}\,[m] * \text{Masse Gewicht}\,[kg] * 9{,}81\ kg/m*s^2$$

Es werden fünf Proben pro Produkt getestet und der Energiemittelwert als Kennzahl für die Schlagzähigkeit angegeben.

Gerät: DuPont Impact Tester (Fa. Cometech, TAIWAN, Model QC-641)

**Untersuchte Klebefilme**

Kommerziell erhältliche Produkte werden eingesetzt wie im Januar 2018 erhältlich.

Bei Desmomelt® 530 handelt es sich um ein weitgehend lineares, thermoplastisches, stark kristallisierendes Polyurethan-Elastomer. Auf folgendes Produktdatenblatt wird Bezug genommen: Produktdatenblatt Desmomelt® 530, Ausgabe 2016-01-19, Covestro AG, Leverkusen.

Desmocoll® 530/1 und Desmocoll® 540/3 sind ebenfalls weitgehend lineare, thermoplastische, elastische Hydroxylpolyurethane mit starker Kristallisationsneigung, erhältlich bei der Firma Covestro AG. Das Produkt Desmocoll® 540/3 hat dabei eine höhere Kristallisationsrate und eine höhere Lösungsviskosität als das Produkt Desmocoll® 530/1.

| | |
|---|---|
| Beispiel 1: | 100 Gew.-% Desmomelt® 530 (Covestro AG) |
| Beispiel 2: | 100 Gew.-% Desmocoll 530/1 (Covestro AG) |
| Beispiel 3: | 100 Gew.-% Desmocoll 540/3 (Covestro AG) |
| Beispiel 4: | 95 Gew.-% Desmomelt® 530 (Covestro AG)<br>5 Gew.-% Dicumylperoxid (CAS 80-43-3) |
| Beispiel 5: | 95 Gew.-% Desmocoll 530/1 (Covestro AG)<br>5 Gew.-% Dicumylperoxid (CAS 80-43-3) |
| Beispiel 6: | 95 Gew.-% Desmocoll 540/3 (Covestro AG)<br>5 Gew.-% Dicumylperoxid (CAS 80-43-3) |
| Beispiel 7: | 92 Gew.-% Desmomelt® 530 (Covestro AG)<br>5 Gew.-% Dicumylperoxid (CAS 80-43-3)<br>3 Gew.-% 3-Methacryloxypropytriethoxysilan (CAS 21142-29-0) |
| Beispiel 8: | 92 Gew.-% Desmomelt® 530 (Covestro AG)<br>5 Gew.-% Dicumylperoxid (CAS 80-43-3)<br>3 Gew.-% 3-Methacryloxypropyltrimethoxysilan (CAS 2530-85-0) |
| Beispiel 9: | 92 Gew.-% Desmomelt® 530 (Covestro AG)<br>5 Gew.-% Dicumylperoxid (CAS 80-43-3)<br>3 Gew.-% [3-(2,3-Epoxypropoxy)propyl]triethoxysilan (CAS 2602-34-8) |
| Beispiel 10: | 92 Gew.-% Desmomelt® 530 (Covestro AG)<br>5 Gew.-% Dicumylperoxid (CAS 80-43-3)<br>3 Gew.-% 2-(3,4-Epoxycyclohexyl)ethyltriethoxysilan (CAS 10217-34-2 ) |
| Beispiel 11: | 92 Gew.-% Desmomelt® 530 (Covestro AG)<br>5 Gew.-% Dicumylperoxid (CAS 80-43-3)<br>3 Gew.-% Vinyltriethoxysilan (CAS 78-08-0) |
| Beispiel 12: | 72 Gew.-% Desmomelt® 530 (Covestro AG)<br>20 Gew.-% Tris[2-(alcrylolyloxy)ethyl]isocyanorat (CAS 40220-08-04)<br>5 Gew.-% Dicumylperoxid (CAS 80-43-3)<br>3 Gew.-% 3-Methacryloxypropyltrimethoxysilan (CAS 2530-85-0) |
| Beispiel 13: | 94 Gew.-% Desmomelt® 530 (Covestro AG)<br>5 Gew.-% Dicumylperoxid (CAS 80-43-3)<br>1 Gew.-% 3-Methacryloxypropyltriethoxysilan (CAS 21142-29-0) |
| Beispiel 14: | 93 Gew.-% Desmomelt® 530 (Covestro AG)<br>5 Gew.-% Dicumylperoxid (CAS 80-43-3)<br>2 Gew.-% 3-Methacryloxypropyltriethoxysilan (CAS 21142-29-0) |
| Beispiel 15: | 94 Gew.-% Desmomelt® 530 (Covestro AG)<br>5 Gew.-% Dicumylperoxid (CAS 80-43-3)<br>1 Gew.-% 3-Methacryloxypropyltrimethoxysilan (CAS 2530-85-0) |
| Beispiel 16: | 93 Gew.-% Desmomelt® 530 (Covestro AG)<br>5 Gew.-% Dicumylperoxid (CAS 80-43-3)<br>2 Gew.-% 3-Methacryloxypropyltrimethoxysilan (CAS 2530-85-0) |

Beispiele 1 bis 3 stellen Vergleichsbeispiele (ohne Zusatz von Dicumylperoxid) dar, Beispiele 4 bis 14 sind erfindungsgemäße Beispiele.

Die jeweiligen Komponenten wurden entsprechend der jeweiligen Zusammensetzung in Methylethylketon (CAS 78-93-3) homogen gelöst, so dass der Gesamtgehalt der vorgenannten Zusammensetzungen (Beispiele 1 bis 12; Summe der jeweils genannten Komponenten) im Lösungsmittel 25 Gew.-% betrug. Die Lösung wurde dann jeweils mit bekannten Verfahren auf ein dem Fachmann für silanhaltige Zusammensetzungen als geeignet bekanntes Trennpapier beschichtet und in einem geeigneten Umlufttrockenschrank für 30 min bei 70 °C getrocknet, so dass ein Klebefilm von jeweils 100 μm (Trockenfilmdichte) resultierte.

Die entsprechenden Klebefilme werden als Frischmuster (innerhalb ... nach vorstehender Trocknung, angegeben als "initial") oder nach definierter Lagerung in einem im Klimaraum befindlichen Trockenschrank (siehe Angaben bei den einzelnen Experimenten in der Tabelle) gemäß der oben angeführten Prüfmethoden untersucht, was zu folgenden Ergebnissen führte (σ: Standardabweichung aus mehreren Messungen):

Push-Out-Test / Feucht-Wärme-Beständigkeit

| | Push-Out | | Feucht-Wärme-Beständigkeit | |
|---|---|---|---|---|
| Beispiel | MPa | σ | MPa | σ |
| 1 | 4,7 | 0,48 | versagt | - |
| 2 | 4,5 | 0,16 | versagt | - |
| 3 | 4,0 | 0,55 | versagt | - |
| 4 | 4,3 | 0,13 | 3,2 | 0,84 |
| 5 | 4,4 | 0,05 | 3,1 | 0,74 |
| 6 | 4,4 | 0,20 | 3,1 | 0,69 |
| 7 | 5,8 | 0,54 | 7,8 | 0,34 |
| 8 | 6,7 | 0,42 | 7,8 | 0,45 |
| 9 | 6,1 | 0,53 | 4,0 | 0,32 |
| 10 | 4,6 | 0,24 | 4,4 | 0,36 |
| 11 | 6,2 | 0,46 | 4,0 | 0,44 |
| 12 | 6,8 | 0,24 | 3,8 | 0,27 |
| 13 | 4,6 | 0,67 | 6,9 | 0,53 |
| 14 | 5,4 | 0,47 | 7,1 | 0,37 |
| 15 | 5,0 | 0,82 | 6,8 | 0,20 |
| 16 | 6,1 | 0,63 | 6,8 | 0,33 |

Klebefilme entsprechend der jeweiligen Beispiele; Austestung initial (Frischprobe ohne weitere Lagerung).

Verpressbedingungen (Herstellung der Prüfkörper): 12 s @ 180 °C @ 10 bar
Feucht-Wärme-Beständigkeit: 72 h @ 85 °C @ 85 % rF
Versagen: Abrutschen von Substrat 1, Blasenbildung

Die Messergebnisse zeigen, dass nur die erfindungsgemäßen Beispiele 4 bis 12 bei Einsatz von Dicumylperoxid die erfindungsgemäß gestellten Anforderungen (Push-Out-Wert mindestens 4 MPA, nach Feucht-Wärme-Lagerung noch > 3 MPa) erfüllen, während die Vergleichsbeispiele 1 bis 3 ohne Einsatz von Peroxiden bei der Feucht-Wärme-Lagerung versagen.

Durch den Einsatz von Silanverbindungen als Haftvermittler (Beispiele 7 bis 16) kann die Feucht-Wärmebeständigkeit gegenüber den Beispielen ohne Silan (Beispiele 4 bis 6) noch weiter verbessert werden.

**Latenz**

| | Push-Out | | Feucht-Wärme-Beständigkeit | |
|---|---|---|---|---|
| Lagerung | MPa | σ | MPa | σ |
| initial | 5,12 | 1,02 | 5,91 | 0,56 |
| 8w @ RT | 5,87 | 0,21 | 5,76 | 0,18 |
| 18w @ RT | 5,94 | 0,33 | 6,30 | 0,38 |
| 4w @ 40°C | 5,06 | 0,47 | 5,58 | 0,37 |
| 10w @ 40°C | 5,56 | 0,24 | 5,87 | 0,87 |
| 18w @ 40°C | 5,36 | 0,76 | 5,12 | 0,48 |

Klebefilm gemäß Beispiel 8. Lagerung der Klebefilme vor Herstellung der Prüfkörper wie in der Tabelle angegeben. Verpressbedingungen (Herstellung der Prüfkörper): 10 s @ 190 °C @ 10 bar

Grafische Darstellung der Ergebnisse siehe Figur 1.

Aus den Ergebnissen ist ersichtlich, dass sowohl initial als auch nach definierter Lagerung Kraftwerte im Push-Out-Test im Bereich von 5 MPa und mehr erreicht werden können und die erfindungsgemäßen Anforderungen somit erfüllt sind.

| | Verpressen | Push-Out | | Feucht-Wärme-Beständigkeit | |
|---|---|---|---|---|---|
| Beispiel | Zeit | MPa | σ | MPa | σ |
| 7 | 12s | 6,3 | 0,56 | 5,6 | 0,03 |
| | 30 s | 6,7 | 0,06 | 6,6 | 0,25 |
| | 60 s | 6,6 | 0,15 | 6,2 | 0,47 |
| 8 | 12s | 6,8 | 0,25 | 5,8 | 0,32 |
| | 30 s | 6,8 | 0,1 | 7,1 | 0,1 |
| | 60 s | 6,5 | 0,17 | 6,5 | 0,37 |

Lagerung: 18 w @ 40 °C
Verpressbedingungen (Herstellung der Prüfkörper): 180 °C @ 10 bar für die jeweils angegebene Zeit
Feucht-Wärme-Beständigkeit: 72 h @ 85 °C @ 85 % rF

Alle untersuchten erfindungsgemäßen Proben haben sich als die gestellten Anforderungen erfüllend erwiesen (Push-Out-Wert mindestens 4 MPA, nach Feucht-Wärme-Lagerung noch > 3 MPa).

**Prozessfenster**

| | Verpressen | | Push-Out | |
|---|---|---|---|---|
| Beispiel | Zeit | Temperatur | MPa | σ |
| 8 | 30 s | 100 °C | 5,21 | 2,97 |
| | 60 s | 100 °C | 7,28 | 0,43 |
| | 120 s | 100 °C | 8,18 | 0,60 |

(fortgesetzt)

| | Verpressen | | Push-Out | |
|---|---|---|---|---|
| Beispiel | Zeit | Temperatur | MPa | σ |
| | 30 s | 125 °C | 8,07 | 0,35 |
| | 60 s | 125 °C | 8,43 | 0,29 |
| | 120 s | 125 °C | 8,67 | 0,45 |
| | 30 s | 150 °C | 8,38 | 0,25 |
| | 60 s | 150 °C | 8,55 | 0,34 |
| | 120 s | 150 °C | 8,71 | 0,20 |
| | 12s | 180 °C | 6,70 | 0,42 |
| | 30 s | 180 °C | 6,80 | 0,33 |
| | 60 s | 180 °C | 6,54 | 0,35 |
| | 120 s | 180 °C | 6,00 | 0,26 |

Klebefilm gemäß Beispiel 8; Austestung initial (Frischprobe ohne weitere Lagerung). Verpressbedingungen (Herstellung der Prüfkörper): 5 bar, Taktzeit und Temperatur wie angegeben

Bei der Messung wurde festgestellt, dass Verpressbedingungen von 30 s bei 100 °C und von 120 s bei 180 °C außerhalb des Prozessfensters liegen, da die Push-Out-Werte unterhalb des Sollwerts von 6,53 MPa [ = 0,75 * maximaler Push-Out-Wert = 0,75 * 8,71 MPa, maximaler Push-Out-Wert bei Verpressbedingungen 120 s; 150 °C] liegen.

**Shock-Performance**

| Verpressbedingungen | E [J] | σ |
|---|---|---|
| 30 s @ 170 °C @ 10 bar | 57 | 4,45 |
| 10 s @ 190 °C @ 10 bar | 55 | 4,32 |

Klebefilm gemäß Beispiel 8, Filmdicke 100 µm. Austestung initial (Frischprobe ohne weitere Lagerung) bei Raumtemperatur (23 °C). Verpressbedingungen wie in der Tabelle angegeben.

Die untersuchten Proben haben sich als sehr schockfest erwiesen.

**DSC-Messungen**

Mit den Beispielen 5, 7, 8 und 13 bis 16 wurden DSC-Messungen durchgeführt, um den Einfluss der Silanmenge auf das Vernetzungsverhalten (also die Härtung des Klebefilms) zu untersuchen. Die Ergebnisse sind in den Figuren 2 und 3 gezeigt.

<u>DSC-Messung:</u>

Messgerät: DSC 204 F1 Phoenix, Fa. Netzsch
Tiegel: Al-Tiegel, Deckel manuell gelocht
Temperaturprogramm: 20 °C ---> -140°C; 140 °C→ 200 °C (erste Aufheizkurve)
Temperaturrate: 10 K/min (mit flüssigem $N_2$ gekühlt)
Methode/ SOP: DSC-01

Dabei zeigt Figur 3 die Beispiele 7, 13 und 14 unter Einsatz von 3-Methacryloxypropytriethoxysilan (CAS 21142-29-0), und Figur 3 die Beispiele 8, 15 und 16 unter Einsatz von 3-Methacryloxypropyltrimethoxysilan (CAS

2530-85-0), zum Vergleich in Figur 2 auch Beispiel 4 ohne den Einsatz von Silan.

In einer für beide Messungen jeweils durchgeführten zweiten Aufheizkurve (200 °C → -140 °C; -140 °C→ 250 °C, nicht gezeigt) kann keine Nachvernetzung beobachtet werden.

Die Bezeichnung der Kurven in den Figuren erfolgt entsprechend der Beispielnummern. Die Symbole "+" symbolisieren die Stellen der Werte wie in den folgenden beiden Tabellen angegeben.

Werte in Figur 2:

| Beispiel | Glasübergang $T_G$ [°C9 | Lage Peak 1 [°C] | Lage Peak 2 [°C] |
|---|---|---|---|
| 7 | - 42,8 | 44,1 | 180,7 |
| 14 | - 43,3 | 44,4 | 180,3 |
| 13 | - 44,4 | 44,6 | 179,9 |
| 5 | - 44,4 | 44,9 | 180,0 |

Werte in Figur 3:

| Beispiel | Glasübergang $T_G$ [°C9 | Lage Peak 1 [°C] | Lage Peak 2 [°C] |
|---|---|---|---|
| 15 | - 42,2 | 45,3 | 180,5 |
| 16 | - 42,8 | 45,4 | 178,9 |
| 8 | - 43,4 | 46,8 | 180,4 |

Diese DSC-Grafiken zeigen, dass das Exothermiemaximum ziemlich konstant bei 180 °C liegt und die Reaktionsenthalpie praktisch unabhängig vom Silangehalt ist. Der Silanzusatz hat somit den positiven Effekt auf die Feucht-Wärme-Beständigkeit wie in den Messungen weiter oben dargestellt, aber keinen signifikanten Einfluss auf die Vernetzungsreaktion (Härtung) des Klebefilms.

## Patentansprüche

1. Klebefilm umfassend eine Schicht aus einem Klebstoff, umfassend ein oder mehrere Polymere und mindestens ein Peroxid,
   **dadurch gekennzeichnet,**

   **dass** der Klebstoff mindestens 50 Gew.-% solcher thermoplastischen Polymere umfasst, die keine C=C-Mehrfachbindungen aufweisen, wobei zumindest eines der thermoplastischen Polymere ein Polyurethan ist,
   **dass** das zumindest eine Peroxid die allgemeine Strukturformel R-O-O-R' besitzt, wobei R und R' jeweils Organylgruppen oder gemeinsam eine zyklische Organylgruppe repräsentieren,
   und **dass** das Peroxid in Form einer 0,1 molaren Lösung in Monochlorbenzol eine 1-Minuten-Halbwertszeittemperatur aufweist, die 200 °C nicht überschreitet.

2. Klebefilm nach einem der vorangehenden Ansprüche, **dadurch gekennzeichnet, dass** als Peroxid Dicumylperoxid eingesetzt wird.

3. Klebefilm nach einem der vorangehenden Ansprüche, **dadurch gekennzeichnet, dass** die Menge an Peroxid im Klebstoff im Bereich von 0,1 bis 10 Gew.-%, bevorzugt von 2 bis 8 Gew.-%, sehr bevorzugt von 3 bis 7 Gew.-% gewählt wird.

4. Klebefilm nach einem der vorangehenden Ansprüche, **dadurch gekennzeichnet, dass** alle thermoplastischen Polymere Polyurethane sind.

5. Klebefilm nach einem der vorangehenden Ansprüche, **dadurch gekennzeichnet, dass** zumindest eines der thermoplastischen Polymere semikristallin ist, insbesondere alle thermoplastischen Polymere semikristallin sind.

6. Klebefilm nach einem der vorangehenden Ansprüche, **dadurch gekennzeichnet, dass** die Polymere eine maximale Glasübergangstemperatur, bestimmt mittels DSC nach DIN 53765:1994-03 wie in der Beschreibung beschrieben, von nicht mehr als - 25 °C, bevorzugt nicht mehr als - 35 °C aufweisen.

7. Klebefilm nach einem der vorangehenden Ansprüche, **dadurch gekennzeichnet, dass** der Klebefilm durch thermische Aktivierung härtbar ist.

8. Klebefilm nach einem der vorangehenden Ansprüche, **dadurch gekennzeichnet, dass** zumindest eines der thermoplastischen Polymere ein thermoplastisches Elastomer ist, insbesondere alle thermoplastischen Polymere thermoplastische Elastomere sind.

9. Klebefilm nach einem der vorangehenden Ansprüche, umfassend weiterhin zumindest einen Haftvermittler, wobei als Haftvermittler vorzugsweise zumindest ein durch eine oder mehrere Alkoxygruppen fuktionalisiertes Silan eingesetzt wird, wobei die Alkoxygruppen vorzugsweise Methoxy- und/oder Ethoxygruppen sind oder umfassen.

10. Klebefilm nach einem der vorangehenden Ansprüche, **dadurch gekennzeichnet, dass** seine nach Aushärtung gegenüber einer Substratoberfläche erreichte Verklebungsfestigkeit nach vorheriger achtzehnwöchiger Lagerung des Klebefilms bei 23 °C, 50 % r.F. mindestens 90 % des Klebkraftwertes einer identischen Verklebung des gleichen Klebefilms, aber nach maximal eintägiger Lagerung bei 23 °C, 50 % r.F. beträgt.

11. Klebefilm nach einem der vorangehenden Ansprüche, **dadurch gekennzeichnet, dass** seine nach Aushärtung gegenüber einer Substratoberfläche erreichte Verklebungsfestigkeit nach vorheriger achtzehnwöchiger Lagerung des Klebefilms bei 40 °C in einem im Normklima (23 °C / 50 % r.F.) befindlichen Trockenschrank mindestens 90 % des Klebkraftwertes einer identischen Verklebung des gleichen Klebefilms, aber nach maximal eintägiger Lagerung bei 23 °C, 50 % r.F. beträgt.

12. Klebefilm nach einem der vorangehenden Ansprüche, **dadurch gekennzeichnet, dass** die zur vollständigen Lösung eines Klebeverbundes, der mit einem zuvor für sechs Wochen bei 23 °C, 50 % r.F. gelagerten Klebefilm von 100 μm Dicke hergestellt wurde, erforderliche senkrecht auf die Verklebungsfläche einwirkende Kraft mindestens 90 % des Wertes der zur Lösung eines entsprechenden Klebeverbundes, der mit einem zuvor nicht länger als einen Tag gelagerten, ansonsten identischen Klebefilm hergestellt wurde, beträgt, wobei der Klebeverbund jeweils durch druckbeaufschlagte Verklebung einer Polycarbonatscheibe - Makrolon 099 - mit einem Rahmen aus anodisiertem Aluminium - E6EV1 - mittels einer Schicht der jeweiligen Klebefolie hergestellt wurde, wobei die druckbeaufschlagte Verklebung bei einer Temperatur von 190 °C und einem Druck von 10 bar für 10 s erfolgt, wobei die effektive Verklebungsfläche 282 $mm^2$ beträgt und wobei die Kraftmessung bei 23 °C und 50 % r.F. durchgeführt wird.

13. Klebefilm nach einem der vorangehenden Ansprüche, **dadurch gekennzeichnet, dass** die zur vollständigen Lösung eines Klebeverbundes, der mit einem zuvor für achtzehn Wochen bei 23 °C, 50 % r.F. gelagerten Klebefilm von 100 μm Dicke hergestellt und dann für 72 h bei 85 °C und 85 % r,F, gelagert und 24 h bei 23 °C, 50 % r.F. rekonditioniert wurde, erforderliche senkrecht auf die Verklebungsfläche einwirkende Kraft mindestens 50 % des Wertes, bevorzugt mindestens 75 % des Wertes, sehr bevorzugt mindestens 90 % des Wertes der zur Lösung eines entsprechend hergestellten und unmittelbar nach seiner Herstellung vermessenen Klebeverbundes beträgt, wobei der Klebeverbund jeweils durch druckbeaufschlagte Verklebung einer Polycarbonatscheibe - Makrolon 099 - mit einem Rahmen aus anodisiertem Aluminium - E6EV1 - mittels einer Schicht der jeweiligen Klebefolie hergestellt wurde, wobei die druckbeaufschlagte Verklebung bei einer Temperatur von 190 °C und einem Druck von 10 bar für 10 s erfolgt, wobei die effektive Verklebungsfläche 282 $mm^2$ beträgt und wobei die Kraftmessung bei 23 °C und 50 % r.F. durchgeführt wird.

14. Klebefilm nach einem der vorangehenden Ansprüche, **dadurch gekennzeichnet, dass** die zur vollständigen Lösung eines Klebeverbundes, der mit einem zuvor für achtzehn Wochen bei 40 °C in einem im Normklima (23 °C / 50 % r.F.) befindlichen Trockenschrank gelagerten Klebefilm von 100 μm Dicke hergestellt und dann für 72 h bei 85 °C und 85 % r,F, gelagert und 24 h bei 23 °C, 50 % r.F. rekonditioniert wurde, erforderliche senkrecht auf die Verklebungsfläche einwirkende Kraft mindestens 50 % des Wertes, bevorzugt mindestens 75 % des Wertes, sehr bevorzugt mindestens 90 % des Wertes der zur Lösung eines entsprechend hergestellten und unmittelbar nach seiner Herstellung vermessenen Klebeverbundes beträgt, wobei der Klebeverbund jeweils durch druckbeaufschlagte Verklebung einer Polycarbonatscheibe - Makrolon 099 - mit einem Rahmen aus anodisiertem Aluminium - E6EV1 - mittels einer Schicht der jeweiligen Klebefolie hergestellt wurde, wobei die druckbeaufschlagte Verklebung bei einer Temperatur von 190 °C und einem Druck von 10 bar für 10 s erfolgt, wobei die effektive Verklebungsfläche 282 $mm^2$ beträgt und wobei die Kraftmessung bei 23 °C und 50 % r.F. durchgeführt wird.

**15.** Verwendung eines Klebefilms nach einem der vorangehenden Ansprüche zum Fügen zweier Substrate.

## Claims

**1.** Adhesive film comprising a layer of an adhesive, comprising one or more polymers and at least one peroxide, **characterized**

**in that** the adhesive comprises at least 50% by weight of those thermoplastic polymers having no C=C multiple bonds, where at least one of the thermoplastic polymers is a polyurethane,
**in that** the at least one peroxide has the general structural formula R-O-O-R’ where R and R’ each represent organyl groups or collectively represent a cyclic organyl group,
and **in that** the peroxide in the form of a 0.1 molar solution in monochlorobenzene has a 1 minute half-life temperature not exceeding 200°C.

**2.** Adhesive film according to claim 1, **characterized in that** the peroxide used is dicumyl peroxide.

**3.** Adhesive film according to either of the preceding claims, **characterized in that** the amount of peroxide in the adhesive is chosen within the range from 0.1% to 10% by weight, preferably from 2% to 8% by weight, very preferably from 3% to 7% by weight.

**4.** Adhesive film according to any of the preceding claims, **characterized in that** all the thermoplastic polymers are polyurethanes.

**5.** Adhesive film according to any of the preceding claims, **characterized in that** at least one of the thermoplastic polymers is semicrystalline, in particular all the thermoplastic polymers are semicrystalline.

**6.** Adhesive film according to any of the preceding claims, **characterized in that** the polymers have a maximum glass transition temperature, determined by DSC to DIN 53765:1994-03 as described in the description, of not more than -25°C, preferably not more than -35°C.

**7.** Adhesive film according to any of the preceding claims, **characterized in that** the adhesive film is curable by thermal activation.

**8.** Adhesive film according to any of the preceding claims, **characterized in that** at least one of the thermoplastic polymers is a thermoplastic elastomer, in particular all the thermoplastic polymers are thermoplastic elastomers.

**9.** Adhesive film according to any of the preceding claims, further comprising at least one adhesion promoter, where the adhesion promoter used is preferably at least one silane functionalized by one or more alkoxy groups, where the alkoxy groups preferably are or comprise methoxy and/or ethoxy groups.

**10.** Adhesive film according to any of the preceding claims, **characterized in that** the adhesive strength thereof with respect to a substrate surface attained after curing, after prior storage of the adhesive film at 23°C, 50% RH for eighteen weeks, is at least 90% of the bonding force value of an identical bond of the same adhesive film but after storage for not more than one day at 23°C, 50% RH.

**11.** Adhesive film according to any of the preceding claims, **characterized in that** the adhesive strength thereof with respect to a substrate surface attained after curing, after prior storage of the adhesive film at 40°C for eighteen weeks in a drying cabinet under standard climatic conditions (23°C / 50% RH), is at least 90% of the bonding force value of an identical bond of the same adhesive film but after storage for not more than one day at 23°C, 50% RH.

**12.** Adhesive film according to any of the preceding claims, **characterized in that** the force acting perpendicularly on the bonding surface that is required to completely part an adhesive bond that has been established with an adhesive film of thickness 100 μm stored beforehand at 23°C, 50% RH for six weeks is at least 90% of the value of the for parting of a corresponding adhesive bond that has been established with an otherwise identical adhesive film that has been stored for not longer than one day beforehand, wherein the adhesive bond in each case has been established by pressurized bonding of a polycarbonate disk - Makrolon 099 - with a frame made of anodized aluminium - E6EV1 - by means of a layer of the respective adhesive film, wherein the pressurized bonding is effected at a temperature of 190°C and a pressure of 10 bar for 10 s, wherein the effective bond area is 282 $mm^2$ and wherein the measurement of force is performed at 23°C and 50% RH.

**13.** Adhesive film according to any of the preceding claims, **characterized in that** the force acting perpendicularly on the bonding surface that is required to completely part an adhesive bond that has been established with an adhesive film of thickness 100 μm stored beforehand at 23°C, 50% RH for eighteen weeks and then stored at 85°C and 85% RH for 72 h and reconditioned at 23°C, 50% RH for 24 h is at least 50% of the value, preferably at least 75% of the value, very preferably at least 90% of the value of the for parting of an adhesive bond established correspondingly and measured directly after establishment thereof, wherein the adhesive bond in each case has been established by pressurized bonding of a polycarbonate disk - Makrolon 099 - with a frame made of anodized aluminium - E6EV1 - by means of a layer of the respective adhesive film, wherein the pressurized bonding is effected at a temperature of 190°C and a pressure of 10 bar for 10 s, wherein the effective bond area is 282 $mm^2$ and wherein the measurement of force is performed at 23°C and 50% RH.

**14.** Adhesive film according to any of the preceding claims, **characterized in that** the force acting perpendicularly on the bonding surface that is required to completely part an adhesive bond that has been established with an adhesive film of thickness 100 μm stored beforehand at 40°C in a drying cabinet under standard climatic conditions (23°C / 50% RH) for eighteen weeks and then stored at 85°C and 85% RH for 72 h and reconditioned at 23°C, 50% RH for 24 h is at least 50% of the value, preferably at least 75% of the value, very preferably at least 90% of the value, of the for parting of an adhesive bond established correspondingly and measured directly after establishment thereof, wherein the adhesive bond in each case has been established by pressurized bonding of a polycarbonate disk - Makrolon 099 - with a frame made of anodized aluminium - E6EV1 - by means of a layer of the respective adhesive film, wherein the pressurized bonding is effected at a temperature of 190°C and a pressure of 10 bar for 10 s, wherein the effective bond area is 282 $mm^2$ and wherein the measurement of force is performed at 23°C and 50% RH.

**15.** Use of an adhesive film according to any of the preceding claims for joining two substrates.

## Revendications

**1.** Film adhésif comprenant une couche d'un adhésif, comprenant un ou plusieurs polymères et au moins un peroxyde, **caractérisé en ce que**

l'adhésif comprend au moins 50 % en poids de polymères thermoplastiques qui ne présentent pas de liaisons multiples C=C, au moins l'un des polymères thermoplastiques étant un polyuréthane,
l'au moins un peroxyde a la formule développée générale R-O-O-R', dans laquelle R et R' représentent chacun des groupes organyle ou conjointement un groupe organyle cyclique,
et le peroxyde présente sous forme d'une solution 0,1 molaire dans du monochlorobenzène une température de demi-vie à 1 minute qui ne dépasse pas 200 °C.

**2.** Film adhésif selon la revendication 1, **caractérisé en ce qu'**on utilise comme peroxyde du peroxyde de dicumyle.

**3.** Film adhésif selon l'une des revendications précédentes, **caractérisé en ce que** la quantité du peroxyde dans l'adhésif est choisie dans la plage de 0,1 à 10 % en poids, de préférence de 2 à 8 % en poids, très préférentiellement de 3 à 7 % en poids.

**4.** Film adhésif selon l'une des revendications précédentes, **caractérisé en ce que** tous les polymères thermoplastiques sont des polyuréthanes.

**5.** Film adhésif selon l'une des revendications précédentes, **caractérisé en ce qu'**au moins l'un des polymères thermoplastiques est semi-cristallin, en particulier tous les polymères thermoplastiques sont semi-cristallins.

6. Film adhésif selon l'une des revendications précédentes, **caractérisé en ce que** les polymères présentent une température maximale de transition vitreuse, déterminée par ACD selon DIN 53765:1994-03 comme décrit dans la description, non supérieure à -25 °C, de préférence non supérieure à -35 °C.

7. Film adhésif selon l'une des revendications précédentes, **caractérisé en ce que** le film adhésif est durcissable par activation thermique.

8. Film adhésif selon l'une des revendications précédentes, **caractérisé en ce qu'**au moins l'un des polymères thermoplastiques est un élastomère thermoplastique, en particulier tous les polymères thermoplastiques sont des élastomères thermoplastiques.

9. Film adhésif selon l'une des revendications précédentes, comprenant en outre au moins un promoteur d'adhérence, le promoteur d'adhérence utilisé étant de préférence au moins un silane fonctionnalisé par un ou plusieurs groupes alcoxy, les groupes alcoxy étant ou comprenant de préférence des groupes méthoxy et/ou éthoxy.

10. Film adhésif selon l'une des revendications précédentes, **caractérisé en ce que** sa résistance de collage atteinte après durcissement, par rapport à une surface de substrat, est, après un stockage préalable de dix-huit semaines du film adhésif à 23 °C sous 50 % d'humidité relative, d'au moins 90 % de la force d'adhérence d'un collage identique du même film adhésif, mais après un stockage maximal d'une journée à 23 °C sous 50 % d'humidité relative.

11. Film adhésif selon l'une des revendications précédentes, **caractérisé en ce que** sa résistance de collage atteinte après durcissement par rapport à une surface de substrat est, après un stockage préalable de dix-huit semaines du film adhésif à 40 °C dans une étuve sèche sous atmosphère normalisée (23 °C/50 % d'humidité relative), d'au moins 90 % de la force d'adhérence d'un collage identique du même film adhésif, mais après un stockage maximal d'une journée à 23 °C sous 50 % d'humidité relative.

12. Film adhésif selon l'une des revendications précédentes, **caractérisé en ce que** la force agissant perpendiculairement sur la surface de collage, nécessaire à la dissolution complète d'un joint collé qui avait été fabriqué avec un film adhésif de 100 μm d'épaisseur préalablement stocké pendant six semaines à 23 °C sous 50 % d'humidité relative, est d'au moins 90 % de la valeur nécessaire de la à la dissolution d'un joint collé correspondant qui avait été fabriqué avec un film adhésif par ailleurs identique, stocké au préalable pendant moins d'une journée, chaque joint collé ayant été fabriqué par collage sous pression d'un disque de polycarbonate - Makrolon 099 - avec un cadre en aluminium anodisé - E6EV1 - à l'aide d'une couche de la feuille adhésive correspondante, le collage sous pression ayant lieu à une température de 190 °C sous une pression de 10 bar pendant 10 secondes, l'aire efficace de collage étant de 282 $mm^2$ et la mesure de la force étant réalisée à 23 °C sous 50 % d'humidité relative.

13. Film adhésif selon l'une des revendications précédentes, **caractérisé en ce que** la force agissant perpendiculairement sur la surface de collage, nécessaire à la dissolution complète d'un joint collé qui avait été fabriqué par un film adhésif de 100 μm d'épaisseur, stocké au préalable pendant dix-huit semaines à 23 °C sous 50 % d'humidité relative, et qui avait été ensuite stocké pendant 72 heures à 85 °C sous 85 % d'humidité relative et reconditionné pendant 24 heures à 23 °C sous 50 % d'humidité relative, est d'au moins 50 % de la valeur, de préférence d'au moins 75 % de la valeur, très préférentiellement d'au moins 90% de la valeur nécessaire de la à la dissolution d'un joint collé fabriqué d'une manière correspondante et mesurée immédiatement après sa fabrication, chaque joint collé ayant été fabriqué par un collage sous pression d'un disque de polycarbonate - Makrolon 099 - avec un cadre en aluminium anodisé - E6EV1 - à l'aide d'une couche de chaque feuille adhésive, le collage sous pression étant réalisé à une température de 190 °C et sous une pression de 10 bar pendant 10 secondes, l'aire efficace de collage étant de 282 $mm^2$, et la mesure de la force étant effectuée à 23 °C sous 50 % d'humidité relative.

14. Film adhésif selon l'une des revendications précédentes, **caractérisé en ce que** la force agissant perpendiculairement à la surface de collage, nécessaire à la dissolution complète d'un joint collé qui avait été fabriqué avec un film adhésif de 100 μm d'épaisseur, stocké au préalable pendant dix-huit semaines à 40 °C dans une étuve sèche sous atmosphère normalisée (23 °C/50 % d'humidité relative) puis stocké pendant 72 heures à 85 °C sous 85 % d'humidité relative et reconditionné pendant 24 heures à 23 °C sous 50 % d'humidité relative, est d'au moins 50 % de la valeur, de préférence d'au moins 75 % de la valeur, très préférentiellement d'au moins 90% de la valeur correspondant de la à la dissolution d'un joint collé fabriqué d'une manière correspondante, et mesuré immédiatement après sa fabrication, chaque joint collé ayant été fabriqué par un collage sous pression d'un disque de polycarbonate -

Makrolon 099 - avec un cadre en aluminium anodisé - E6EV1 - à l'aide d'une couche de chaque feuille adhésive, le collage sous pression étant réalisé à une température de 190 °C et sous une pression de 10 bar pendant 10 secondes, l'aire efficace de collage étant de 282 $mm^2$, et la mesure de la force étant effectuée à 23 °C sous 50 % d'humidité relative.

**15.** Utilisation d'un film adhésif selon l'une des revendications précédentes pour assembler deux substrats.

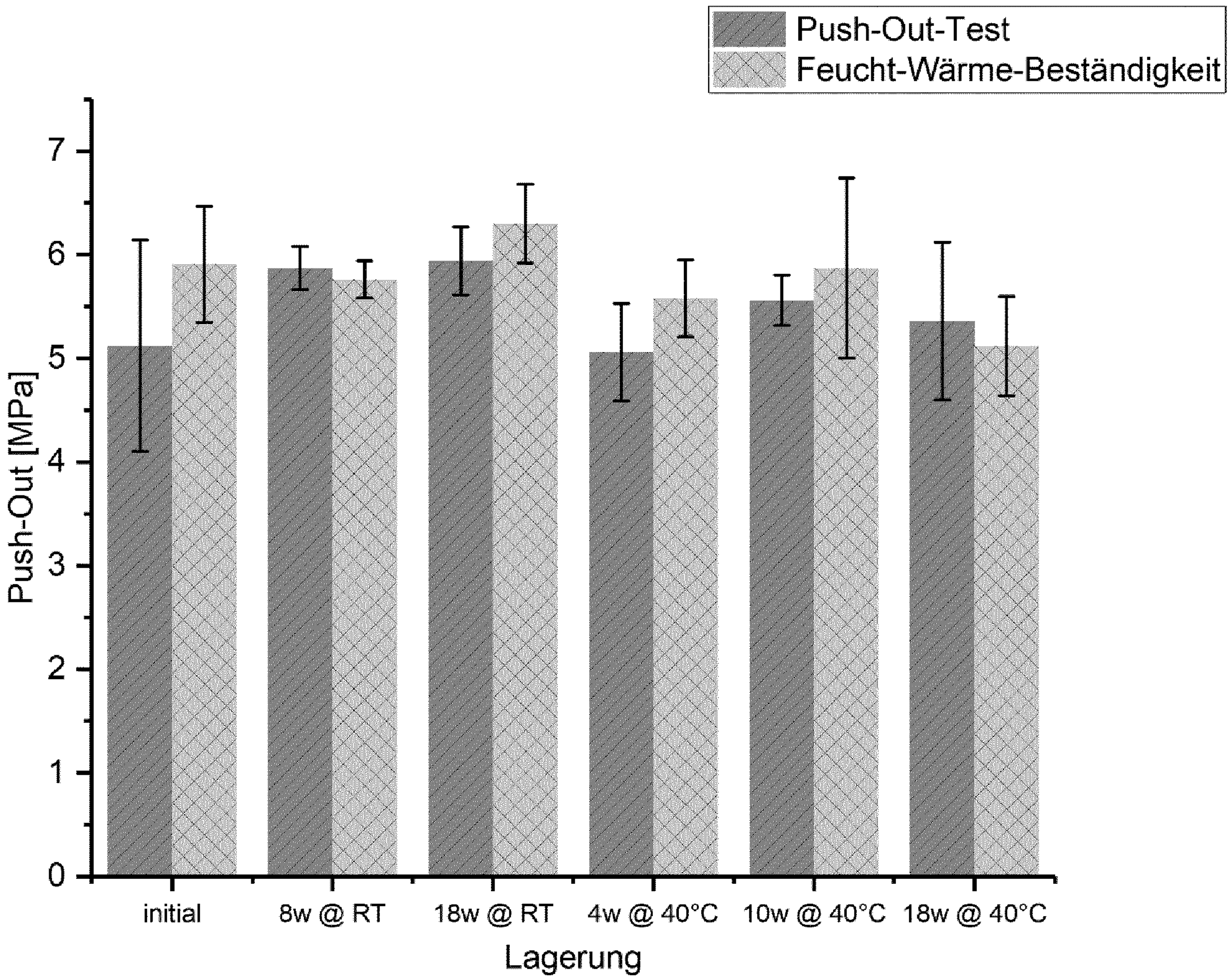
Push-Out-Test
Feucht-Wärme-Beständigkeit
Push-Out [MPa]
0
1
2
3
4
5
6
7
initial
8w @ RT
18w @ RT
4w @ 40°C
10w @ 40°C
18w @ 40°C
Lagerung

Figur 1

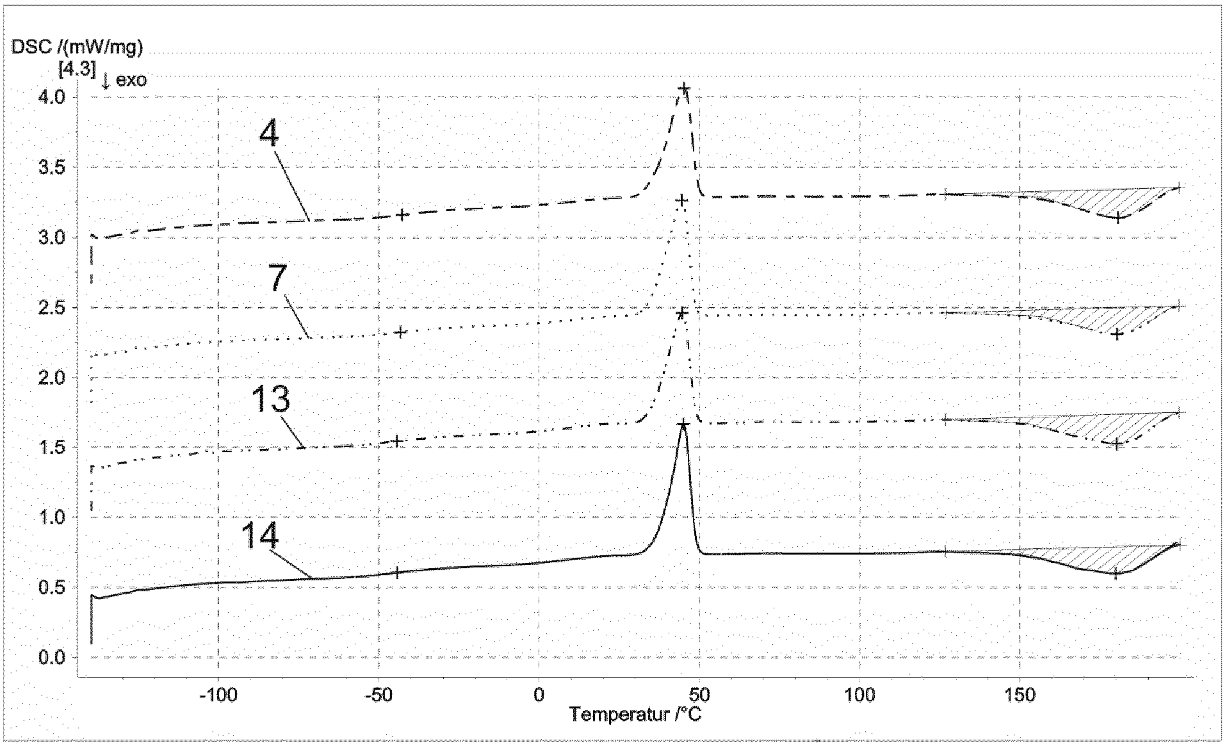


Figur 2

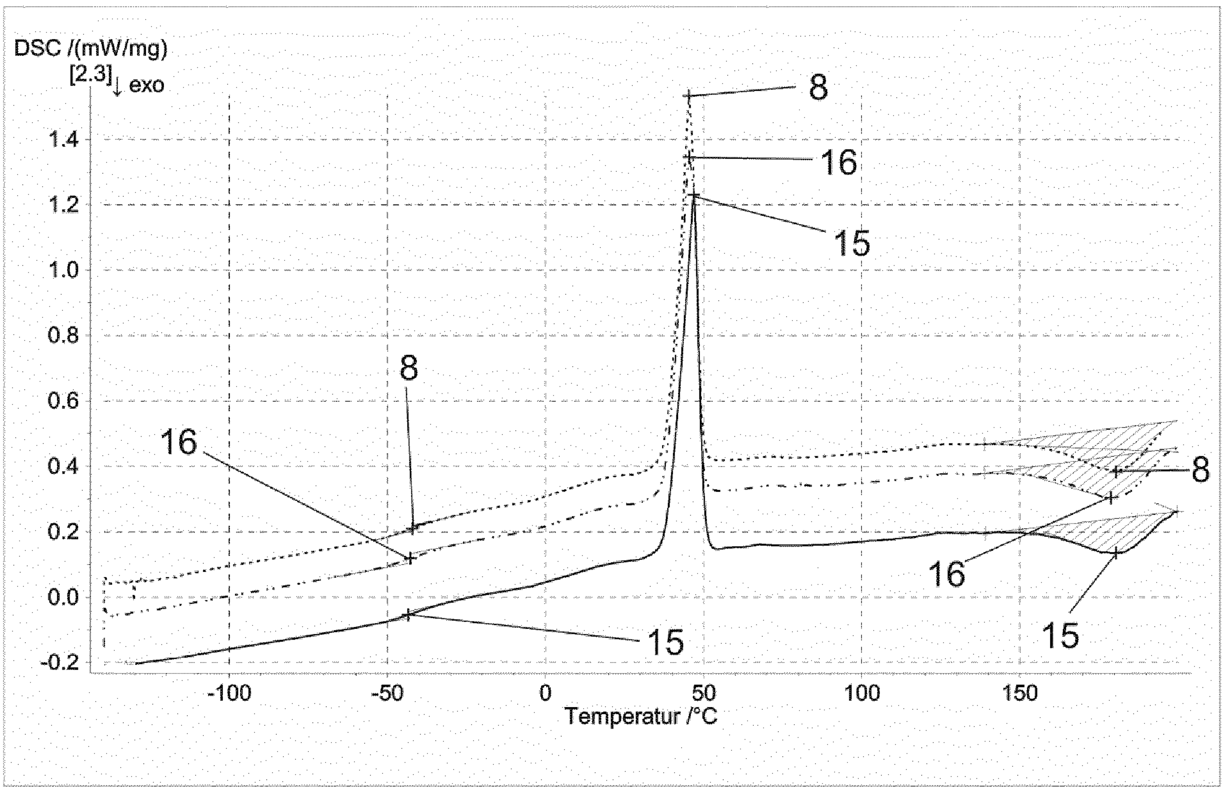


Figur 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0650987 A
- US 4725637 A
- EP 287928 A
- US 2003178138 A
- DE 102013222739
- EP 1734092 A1
- DE 102009005518 A1
- EP 894841 B1
- EP 1308492 B1
- WO 9325599 A
- DE 102010013145 A


### In der Beschreibung aufgeführte Nicht-Patentliteratur


- *CHEMICAL ABSTRACTS,* 80-43-3
- *CHEMICAL ABSTRACTS,* 21142-29-0
- *CHEMICAL ABSTRACTS,* 2530-85-0
- *CHEMICAL ABSTRACTS,* 2602-34-8
- *CHEMICAL ABSTRACTS,* 10217-34-2
- *CHEMICAL ABSTRACTS,* 78-08-0
- *CHEMICAL ABSTRACTS,* 40220-08-04
- *CHEMICAL ABSTRACTS,* 78-93-3